(19) Europäisches Patentamt / European Patent Office / Office européen des brevets

(11) **EP 2 875 412 B1**

(12) **EUROPÄISCHE PATENTSCHRIFT**

(45) Veröffentlichungstag und Bekanntmachung des Hinweises auf die Patenterteilung:
**20.06.2018  Patentblatt 2018/25**

(21) Anmeldenummer: **13737836.0**

(22) Anmeldetag: **17.07.2013**

(51) Int Cl.:
**G05B 15/02** *(2006.01)*  **G06F 13/42** *(2006.01)*
**G05B 19/042** *(2006.01)*

(86) Internationale Anmeldenummer:
**PCT/EP2013/065096**

(87) Internationale Veröffentlichungsnummer:
**WO 2014/012976 (23.01.2014 Gazette 2014/04)**

(54) **VERFAHREN ZUM SYNCHRONISIEREN VON ANZEIGEELEMENTEN**

METHOD FOR SYNCHRONIZING DISPLAY ELEMENTS

PROCÉDÉ DE SYNCHRONISATION D'ÉLÉMENTS D'AFFICHAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.07.2012  DE 102012106601**

(43) Veröffentlichungstag der Anmeldung:
**27.05.2015  Patentblatt 2015/22**

(73) Patentinhaber: **Pilz GmbH & Co. KG**
**73760 Ostfildern (DE)**

(72) Erfinder:
• **GODAU, Thorsten**
**73760 Ostfildern (DE)**

• **ADAMS, Christian**
**73760 Ostfildern (DE)**
• **SPERRER, Reinhard**
**73760 Ostfildern (DE)**
• **SEIZINGER, Dietmar**
**73760 Ostfildern (DE)**

(74) Vertreter: **Witte, Weller & Partner Patentanwälte mbB**
**Postfach 10 54 62**
**70047 Stuttgart (DE)**

(56) Entgegenhaltungen:
**CN-U- 201 636 609        DE-A1- 19 625 195**
**DE-A1-102010 063 089**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 875 412 B1

## Beschreibung

Die vorliegende Erfindung betrifft ein Verfahren zum Synchronisieren von Anzeigeelementen in einem Steuerungssystem mit über einen Bus verbundenen Teilnehmern, die zumindest einen Nachrichtensender und eine Anzahl von Nachrichtenempfängern umfassen. Der Nachrichtempfänger umfasst jeweils ein Anzeigeelement, das zeitlich abwechselnd in einen eingeschalteten und einen ausgeschalteten Zustand versetzbar ist, und eine Steuereinheit zum Erzeugen eines Steuersignals, das das Anzeigeelement zwischen den Zuständen umschaltet, wobei der Nachrichtensender in einem definierten wiederkehrenden Busnachrichtenzeitintervall eine jeweils aktuelle Busnachricht über den Bus sendet.

Die Erfindung betrifft ferner ein Steuerungssystem, insbesondere zur automatisierten Steuerung einer technischen Anlage, mit über einen Bus verbundenen Teilnehmern, die zumindest einen Nachrichtensender und eine Anzahl von Nachrichtenempfängern umfassen. Der Nachrichtenempfänger umfasst jeweils ein Anzeigeelement, das zeitlich abwechselnd in einen eingeschalteten und einen ausgeschalteten Zustand versetzbar ist, und eine Steuereinheit zum Erzeugen eines Steuersignals, das das Anzeigeelement zwischen den Zuständen umschaltet, wobei der Nachrichtensender in einem definierten wiederkehrenden Busnachrichtenzeitintervall eine jeweils aktuelle Busnachricht über den Bus sendet.

Ein solches Verfahren und eine solche Steuereinheit sind beispielsweise aus CN 2016 36 609 U bekannt.

Ein Steuerungssystem dieser Art ist beispielsweise auch eine programmierbare Steuerung, wie sie die Anmelderin der vorliegenden Erfindung unter der Marke PSS® vertreibt, wie beispielsweise aus der Beschreibung "PSSuniversal, Programmable Control Systems PSS®, System Description, No. 21256-EN-04" der Anmelderin bekannt.

Ein Steuerungssystem im Sinne der vorliegenden Erfindung kann zur automatisierten Steuerung einer technischen Anlage verwendet werden, insbesondere zum Steuern eines sicherheitskritischen Prozesses, bei dem eine fehlerfreie Funktion erforderlich ist, um eine Gefahr für Personen zu vermeiden. Ein solches Steuerungssystem ist beispielsweise in WO 2004/097539 A1 offenbart. Insbesondere geht es um die Überwachung und Steuerung von automatisiert arbeitenden Anlagen, von deren Betrieb eine Verletzungsgefahr für Personen ausgeht. Üblicherweise wird eine solche Anlage mit Schutzzäunen, Schutztüren, Lichtschranken, Lichtgittern, Not-Aus-Tastern und anderen Sicherheitssensoren abgesichert. Sobald eine Schutztür geöffnet wird, eine Lichtschranke durchbrochen oder ein Not-Aus-Taster betätigt wird, muss die Anlage angehalten werden oder auf andere Weise in einen ungefährlichen Zustand gebracht werden. Dies erreicht man üblicherweise, indem eine fehlersicher ausgebildete Steuerung Zustandssignale der Schutztüren, Lichtgitter, Not-Aus-Taster etc. in definierten wiederkehrenden Zeitintervallen auswertet und in Abhängigkeit davon sicherheitsrelevante Aktoren betätigt, wie beispielsweise Schütze, die im Stromversorgungspfad zu den elektrischen Antrieben der Anlage angeordnet sind. Häufig sind die Sensoren und Aktoren räumlich entfernt von der Steuerung. Bei einer größeren Anlage mit vielen Sensoren und Aktoren bietet es sich an, die Steuerung über ein sog. Feldbussystem mit den Sensoren und Aktoren zu verbinden. Das Feldbussystem ermöglicht den Austausch von digitalen Daten, die die Zustände der Sensoren und Aktoren sowie Steuerbefehle der Steuerung repräsentieren. Ein Beispiel für ein solches Feldbussystem ist SafetyBUS p oder SafetyNet p.

Ein Steuerungssystem im Sinne der vorliegenden Erfindung kann beispielsweise ein modulares Steuerungssystem für eine konfigurierbare oder programmierbare Steuerung sein. Es kann eine konfigurierbare Steuerung sein, wie beispielsweise jene, die die Anmelderin der vorliegenden Erfindung unter der Marke PNOZ® vertreibt, oder eine programmierbare Steuerung, wie beispielsweise jene, die die Anmelderin der vorliegenden Erfindung unter der Marke PSS® vertreibt, oder eine dieser ähnliche. Unter konfigurierbar ist hier das Anpassen oder Einstellen eines Hardwarebestandteils der Steuerung zu verstehen, wie beispielsweise einer Verdrahtung. Unter programmierbar ist hier das Anpassen oder Einstellen eines Softwarebestandteils der Steuerung zu verstehen, beispielsweise mittels einer Programmiersprache.

Insbesondere stellt PSSuniversal® ein modulares programmierbares Steuerungssystem für Standard- und Sicherheitsaufgaben bereit, wie aus der zuvor genannten Beschreibung "Pilz, PSSuniversal, Programmable Control Systems PSS®, System Description, No. 21256-EN-04" bekannt. Ein PSSu-System umfasst ein Kopfmodul, das den Einsatzbereich des PSSu-Systems bestimmt (wie z. B. Einsatz als dezentrales I/O-System, Kopplung an verschiedene Feldbussysteme, sicherheitsgerichtete Kommunikation über SafetyBUS p, sicherheitsgerichtete Kommunikation über PROFINET mit PROFIsafe usw.). Das PSSu-System umfasst weiterhin Ein-/Ausgabemodule, die die Funktionen des PSSu-Systems bestimmen. Die Modulanordnung ist derart, dass rechts neben einem Kopfmodul die Ein-/Ausgabemodule aneinandergereiht angeordnet sind. Aus einer Vielzahl verschiedener Ein-/Ausgabemodule kann effizient und kostengünstig eine Ein-Ausgabe-Baugruppe (auch I/O-Baugruppe genannt) auf die jeweilige Anwendung angepasst werden. Die Ein-/Ausgabemodule bzw. deren Elektronikmodule kommunizieren mit dem Kopfmodul über einen Modulbus (oder auch Rückwandbus genannt). Ein PSSu-System bietet viele Möglichkeiten zur Diagnose. Die Diagnose eines PSSu-Systems kann beispielsweise über LEDs an den Ein-/Ausgabemodulen und dem Kopfmodul erfolgen.

Diese LEDs an den Modulen können zur Statusanzeige blinken oder blitzen, beispielsweise in einem bestimmten Rhythmus. Es kann so ein bestimmter Betriebszustand des Systems angezeigt werden. Ein Problem kann sein, das diese Module nicht synchron zueinander blinken oder blitzen. Dies kann für den Benutzer bzw. Betrachter des Systems irritierend oder unangenehm sein, insbesondere weil die Module räumlich nahe beieinander bzw. direkt nebeneinander angeordnet sind. Zudem kann ein nicht-synchrones Blinken oder Blitzen für den Benutzer eine einfache "First-level" Diagnose erschweren.

Es sind im Stand der Technik allgemein Verfahren zum Synchronisieren von Teilnehmern in einem Netzwerk bekannt, insbesondere zum Synchronisieren der Uhrzeit. Beispielsweise offenbart die Broschüre "SafetyNET p, Version 1.1, System Description" des Safety Network International e.V. (www.safety-network.de) Methoden zur Synchronisierung zwischen Teilnehmern im Netz. Die Methoden lösen Aktionen im gesamten Netzwerk zum gewünschten Zeitpunkt aus, d.h. netwerkweit synchronisierte Ereignisse. Um derartige Methoden netzwerkweit zu etablieren, benötigt jeder Netzteilnehmer eine genaue, und mit den anderen Teilnehmern synchronisierte Uhr. Die Genauigkeit der Uhren und der Synchronisierung bestimmen dabei die Genauigkeit des Gesamtsystems. Als Maß für die Genauigkeit wird der Jitter, die Ungenauigkeit der Uhren zueinander, verwendet. Bei SafetyNET p kommt eine hochpräzise Masteruhr zum Einsatz, die über Synchronisierungsmechanismen die Uhren der übrigen Teilnehmer kontinuierlich abgleicht. Die Masteruhr selbst kann wiederum mit Weltzeitatomuhren synchronisiert werden. Basierend auf präzisen, synchronen Uhren kann nun eine Aktionsanforderung vorab an die Teilnehmer verschickt werden, und diese führen die Aktion dann zum geforderten Zeitpunkt aus. Somit ist die Übertragung und die Ausführung zeitlich entkoppelt. Es ist damit möglich das Einlesen oder Ausgeben von Daten im gesamten Netzwerk zu synchronisieren. In SafetyNET p können alle Geräte, sofern es für die jeweilige Anwendung erforderlich ist, die Geräteuhren synchronisieren. Für die Synchronisierung der SafetyNET p- Geräte in Real Time Frame Network (RTFN) wird das in der IEEE 1588 standardisierte Precision time protocol (PTP) verwendet. Zusätzlich wird das Precise clock synchronisation protocol (PCS) eingesetzt, das auf die Verwendung in Real Time Frame Line (RTFL) optimiert ist. WO 2006/069691 A1 beispielsweise beschreibt ein solches RTFL Verfahren.

Derartige Verfahren zum Synchronisieren der Uhrzeit bzw. Zeitregelverfahren jedoch sind sehr aufwändig und erzeugen eine hohe Buslast.

Vor diesem Hintergrund ist es eine Aufgabe der vorliegenden Erfindung, ein Verfahren zum Synchronisieren von Anzeigeelementen in einem Steuerungssystem und ein entsprechendes Steuerungssystem anzugeben. Es ist insbesondere eine Aufgabe der vorliegenden Erfindung, ein Verfahren und entsprechendes Steuerungssystem anzugeben, bei dem die Anzeigeelemente auf einfache und/oder kostengünstige Art und Weise synchronisiert werden. Zudem ist es eine Aufgabe der vorliegenden Erfindung die Benutzerfreundlichkeit und/oder Sicherheit zu erhöhen.

Gemäß einem Aspekt der Erfindung wird diese Aufgabe durch ein Verfahren zum Synchronisieren von Anzeigeelementen eingangs genannter Art gelöst, wobei die Busnachricht jeweils einen Busnachrichtenzähler umfasst, der einen Wert in einem definierten Wertebereich hat, wobei beim Senden einer aktuellen Busnachricht jeweils der Wert in einer vordefinierten Weise geändert wird, und wobei nach Erreichen des Endes des Wertebereichs der Wert zurückgesetzt wird, wobei der Nachrichtenempfänger jeweils die Busnachrichten über den Bus empfängt, und wobei die Steuereinheit jeweils in gleicher Weise den Busnachrichtenzähler in der aktuellen Busnachricht auswertet und in Abhängigkeit davon das Steuersignal erzeugt, so dass die Anzeigelemente synchron zueinander mit einer bestimmten Ein-/Aus-Periode abwechselnd in den eingeschalteten und den ausgeschalteten Zustand versetzt werden.

Die Aufgabe wird gemäß einem weiteren Aspekt der Erfindung durch ein Steuerungssystem eingangs genannter Art gelöst, insbesondere zur automatisierten Steuerung einer technischen Anlage, wobei die Busnachricht jeweils einen Busnachrichtenzähler umfasst, der einen Wert in einem definierten Wertebereich hat, wobei der Nachrichtensender dazu ausgebildet ist beim Senden einer aktuellen Busnachricht jeweils den Wert in einer vordefinierten Weise zu verändern und nach Erreichen des Endes des Wertebereichs den Wert zurückzusetzen, wobei der Nachrichtenempfänger jeweils dazu ausgebildet ist die Busnachrichten über den Bus zu empfangen, und wobei die Steuereinheit jeweils in gleicher Weise dazu ausgebildet ist den Busnachrichtenzähler in der aktuellen Busnachricht auszuwerten und in Abhängigkeit davon das Steuersignal zu erzeugen, so dass die Anzeigelemente synchron zueinander mit einer bestimmten Ein-/Aus-Periode abwechselnd in den eingeschalteten und den ausgeschalteten Zustand versetzt werden.

Gemäß einem weiteren Aspekt der Erfindung wird diese Aufgabe durch einen Busnachrichtenempfänger in einem Steuerungssystem mit über einen Bus verbundenen Teilnehmern gelöst, der Busnachrichtenempfänger mit einem Speichermedium auf dem Programmcode gespeichert ist, der dazu ausgebildet ist, das Verfahren zum Synchronisieren von Anzeigeelementen auszuführen, wenn der Busnachrichtenempfänger mit dem Bus verbunden ist.

Das neue Verfahren und das neue Steuerungssystem verwenden also einen Busnachrichtenzähler zum Synchronisieren der Anzeigeelemente (z.B. LEDs). Der Busnachrichtenzähler (oder auch Buszykluszähler genannt) ist insbesondere bereits im Steuerungssystem gegeben, beispielsweise zur Sicherung der Datenübertragung. Somit kommt das neue Verfahren und das neue Steuerungssystem mit bereits gegebenen Mechanismen aus bzw. verwendet vorhandene Strukturen. Es ist kein aufwändiges Verfahren nötig für die relativ "triviale" Aufgabe des Synchronisierens von Anzeigelementen (z.B. LEDs). Somit kann das Synchronisieren der Anzeigeelemente ohne Abändern der vorhandenen Nachrichten- oder Telegrammstrukturen und ohne großen zusätzlichen Implementierungsaufwand erreicht werden.

Dadurch, dass die Steuereinheiten den Busnachrichtenzähler in gleicher Weise auswerten und ihre Anzeigelemente entsprechend ansteuern, wird erreicht, dass die Anzeigelemente der verschiedenen Nachrichtenempfänger synchron zueinander in den ein- und ausgeschalteten Zustand versetzt werden, insbesondere mit einer bestimmten bzw. konstanten Ein-/Aus-Periode. Mit anderen Worten blinken oder blitzen die Anzeigelemente synchron zueinander. Die bestimmte Ein-/Aus-Periode wird daher auch Blinkperiode oder Blitzperiode genannt. Insbesondere bei einem Steuerungssystem, bei dem die Nachrichtenempfänger räumlich nahe beieinander angeordnet sind, ist ein solches, für das menschliche Auge bzw. das Auge des Benutzers, "synchrones" Blinken wichtig. Das Auswerten in gleicher Weise bedeutet insbesondere, dass die Steuereinheit bzw. Steuereinheiten den Busnachrichtenzähler jeweils mit einem Steuerungsalgorithmus (auch Steuerungslogik oder Steuerungsprogramm genannt) auswertet bzw. auswerten, wobei die Steuerungsalgorithmen gleich sind.

Insbesondere kann zumindest ein erster und zweiter Nachrichtenempfänger verwendet werden. Die Steuereinheit des ersten Nachrichtenempfängers empfängt den Busnachrichtenzähler in der aktuellen Busnachricht und auch die Steuereinheit des zweiten Nachrichtenempfängers empfängt den Busnachrichtenzähler in der aktuellen Busnachricht, insbesondere zur quasi gleichen Zeit. Die Steuereinheiten des ersten und zweiten Nachrichtenempfängers haben also die gleiche Einganggröße: den Busnachrichtenzähler. Die Steuereinheit des ersten Nachrichtenempfängers wertet den Busnachrichtenzähler mit einem ersten Steuerungsalgorithmus aus, und die Steuereinheit des zweiten Nachrichtenempfängers wertet den Busnachrichtenzähler mit einem zweiten Steuerungsalgorithmus aus. Der erste und zweite Steuerungsalgorithmus sind dabei gleich. Somit werten die Steuereinheiten den Busnachrichtenzähler in gleicher Weise aus. Abhängig vom Ergebnis der Auswertung bzw. des Steuerungsalgorithmus wird dann das Steuersignal zum Steuern des Anzeigeelements erzeugt.

Unter Steuersignal ist insbesondere ein Steuersignal verstanden, Steuersignals, das das Anzeigelement von dem eingeschalteten in den ausgeschalteten Zustand oder von dem ausgeschalteten in den eingeschalteten Zustand versetzt. Durch dieses Steuersignal wird das Anzeigelement somit ein- oder ausgeschaltet. Beispielsweise kann im eingeschalteten Zustand das Anzeigeelement bestromt bzw. mit Energie versorgt sein, während es im ausgeschalteten Zustand unbestromt bzw. nicht mit Energie versorgt ist. Es kann hierzu beispielsweise eine Strom- oder Energiequelle und ein damit verbundenes Schaltelement (z.B. Transistor) verwendet werde, das von dem Steuersignal gesteuert wird. Der Steuerungsalgorithmus kann bei jedem Auswerten ein Signal erzeugen, das den ein- oder ausgeschalteten Zustand des Anzeigelements angibt. Das Steuersignal kann dann erzeugt werden, wenn das Signal sich ändert.

Unter "synchron" ist insbesondere zu verstehen, dass die Anzeigelemente zur gleichen Zeit in den gleichen Zustand (eingeschalteter oder ausgeschalteter Zustand) versetzt sind. Insbesondere werden die Anzeigeelemente mit im Wesentlichen gleicher Ein-/Aus-Periode (auch Frequenz genannt) und Phase in den ein- und ausgeschalteten Zustand versetzt. Ein-/Aus-Periode und Phase werden von dem Busnachrichtenzähler eindeutig abgeleitet. Mit anderen Worten blinken oder blitzen die Anzeigeelemente mit synchroner Frequenz und Phase. Es wird also die Blinkfrequenz und die Blinkphase synchronisiert. Im Gegensatz dazu würden die Anzeigelemente beim "asynchronen" Blinken gegenläufig zueinander blinken, d.h. das eine Anzeigeelement wäre im eingeschalteten Zustand, wenn das andere Anzeigeelement im ausgeschalteten Zustand ist, und umgekehrt. Ein solches asynchrones Blinken sowie jegliche sichtbare Phasenverschiebung kann mit dem neuen Verfahren und dem neuen Steuerungssystem jedoch vermieden werden.

Entscheidend für das Erreichen der Synchronität ist der Busnachrichtenzähler. Zum einen werden die Busnachrichten (oder auch Datenpakete oder Telegramme genannt) mit dem Busnachrichtenzähler in einem definierten wiederkehrenden Busnachrichtenzeitintervall über den Bus gesendet. Es liegt also ein "zyklisches" Senden der Busnachrichten bzw. eine zyklische Buskommunikation vor. Bei der zyklischen Buskommunikation sind die Busnachrichtenzeitintervalle konstant, insbesondere über den Zeitraum des Betriebs der Buskommunikation.

Zum anderen hat der Busnachrichtenzähler einen Wert in einem definierten Wertebereich und wird beim Senden jeweils, insbesondere bei jedem Senden, in einer vordefinierten Weise geändert. Der Busnachrichtenzähler ist somit ein "deterministischer" Zähler bzw. Zählerwert. Bei einem deterministischen Busnachrichtenzähler ist der Wertebereich konstant, insbesondere über den Zeitraum des Betriebs der Buskommunikation. Rein theoretisch könnte der Wertebereich unendlich sein. In der Praxis jedoch ist der Wertebereich endlich. Wenn das Ende dieses Wertebereichs erreicht ist, muss der Wert des Busnachrichtenzählers wieder zurückgesetzt werden, insbesondere auf seinen Anfangswert, beispielsweise auf null. Dieses Zurücksetzen bei Erreichen des Endes des Wertebereichs kann auch als "automatischer Überlauf" bezeichnet werden.

Der Wertebereich kann vorzugsweise durch die vorgesehene oder definierte Größe des Busnachrichtenzählers in der Busnachricht festgelegt sein (z.B. in Bit oder Byte gemessen). Sind n Bit für den Busnachrichtenzähler vorgesehen, so beträgt der (maximale) Wertebereich $2^n$. Beispielsweise ergibt sich somit bei 8 Bit ein (maximaler) Wertebereich von 256, bei 16 Bit ein (maximaler) Wertebereich von 65.536, oder bei 32 Bit ein (maximaler) Wertebereich von 4.294.967.296. Alternativ kann der Wertebereich aber auch angepasst werden bzw. kleiner als der durch die Größe definierte maximale Wertebereich sein.

Insbesondere wird der Busnachrichtenzähler beim Senden jeweils um einen festgelegten, vorzugsweise ganzzahligen, Wert inkrementiert, insbesondere von null anfangend. Beispielsweise kann der Busnachrichtenzähler beim Senden jeweils um eins inkrementiert werden. Dies ist die bevorzugte und wohl einfachste Implementierung. Rein theoretisch kann jedoch jede andere ganzzahlige Inkrementierung erfolgen. Alternativ kann der Busnachrichtenzähler auch beim Senden jeweils um einen festgelegten, vorzugsweise ganzzahligen Wert, dekrementiert werden, insbesondere vom maximalen Wert des Wertebereichs anfangend. Alternativ kann der Busnachrichtenzähler beim Senden jeweils um einen reellen bzw. nicht-ganzzahligen Wert inkrementiert oder dekrementiert werden. Wichtig ist, dass der Busnachrichtenzähler auf vordefinierte bzw. deterministisch, und daher allen Teilnehmern bekannte, Weise geändert wird.

Vorzugsweise können die Busnachrichten mit dem Busnachrichtenzähler "quasi-gleichzeitig" (z.B. innerhalb weniger 10 -100 μs) an den Busnachrichtenempfängern ankommen. Ansonsten könnte sich durch die Nachrichtenverzögerung und die damit verbundene verzögerte Auswertung des Busnachrichtenzählers eine sichtbare Phasenverschiebung des Blinkens der Anzeigelemente ergeben. Insbesondere bei Steuerungssystemen, bei denen die Nachrichtenempfänger räumlich nahe beieinander angeordnet sind, stellen Nachrichtenverzögerungen in der Regel jedoch kein Problem dar. Insbesondere kann es von Bedeutung sein, dass die Zeit zwischen Senden der Busnachricht mit Busnachrichtenzähler bis zum Auswerten des Busnachrichtenzählers für jeden Busnachrichtenempfänger quasi gleich ist. Das heißt die Auswertung in den verschiedenen Busnachrichtenempfängern erfolgt quasi gleichzeitig. Beispielsweise kommt es bei einer (Cut-Through-) Linientopographie per se schon zu einer gewissen Verzögerung oder Latenz zwischen zwei Busnachrichtenempfängern. Die Zeit, die Einfluss auf eine Phasenverschiebung des Blinken oder Blitzens nehmen kann, kann insbesondere die Verzögerung oder Latenz einer Busnachricht beim Passieren jedes Busnachrichtenempfängers sein. Diese ist in den betreffenden Steuerungssystemen meist so gering, dass die Busnachrichten quasi-gleichzeitig bei jedem Busnachrichtenempfänger ankommen.

Aufgrund der zuvor beschriebenen zyklischen Buskommunikation mit deterministischem Busnachrichtenzähler und entsprechendem gleichartigen Auswerten des Busnachrichtenzählers zum Ansteuern der Anzeigelemente wird die Synchronisierung der Anzeigeelemente erreicht. Auch wenn ein neuer Nachrichtenempfänger während des Betriebs der Buskommunikation mit dem Bus verbunden wird, kann dieser neue Busnachrichtenempfänger anhand des Busnachrichtenzählers eindeutig bestimmen, wann er sein Anzeigelement in den ein- bzw. ausgeschalteten Zustand zu versetzen hat. Mit anderen Worten weiß auch ein gerade hinzu geschalteter Nachrichtenempfänger, wie sein Anzeigelement mit den anderen Anzeigelementen synchron blinken kann.

Der Busnachrichtenzähler wurde bisher insbesondere für einen ganz anderen Zweck eingesetzt, nämlich zur Beherrschung von Nachrichtenübertragungsfehlern oder Nachrichtenverzögerungen. Dies ist beispielweise eine Voraussetzung für die Zertifizierung eines Netzwerks, das für die Übertragung von sicherheitsrelevanten Nachrichten im Sinne der Normen EN 954-1, IEC 61508 und EN ISO 13849-1 zugelassen werden soll. Maßnahmen zur Beherrschung von solchen Nachrichtenübertragungsfehlern oder Nachrichtenverzögerungen sind beispielsweise in dem Dokument "Prüfgrundsätze für Bussysteme für die Übertragung sicherheitsrelevanter Nachrichten" beschrieben, das unter der Bezeichnung GS-ET-26 vom Fachausschuss Elektrotechnik des Hauptverbandes der gewerblichen Berufsgenossenschaften in Deutschland herausgegeben ist. In diesem Dokument ist als Maßnahme zur Fehlerbeherrschung unter anderem eine sogenannte laufende Nummer beschrieben, die an jede Nachricht, die Sender und Empfänger austauschen, angehängt wird. Diese laufende Nummer kann als ein zusätzliches Datenfeld definiert werden, das eine Zahl enthält, die sich in vordefinierter Art und Weise von Nachricht zu Nachricht ändert.

Weiterhin ist eine solche laufende Nummer, beispielsweise für die zuvor genannte programmierbare Steuerung PSS®, in dem Dokument "PSS SW Ethernet Parameter Set-up, Operating Manual,Item No. 20 575-02" beschrieben. Hier wird der Aufbau eines SPS-Headers der Fa. INAT GmbH beschreiben, der zwei Byte reserviert hat für eine sogenannte Sequenznummer, die beim Verbindungsaufbau den Wert 0 und bei jedem Senden von Nutzdaten inkrementiert wird. Auch dieser Telegrammzähler dient der zusätzlichen Sicherung der Datenübertragung.

Das neue Verfahren zum Synchronisieren von Anzeigeelementen und das neue Steuerungssystem verwendet also in Form des Busnachrichtenzählers (oder auch Telegrammzähler genannt) vorhandene Strukturen bzw. gegebene Mechanismen. Im Gegensatz zu den zuvor genannten Verfahren zum Synchronisieren der Uhrzeit bzw. Zeitregelverfahren des Standes der Technik ist das neue Verfahren weniger aufwändig und erzeugt weniger Buslast für die relativ "triviale" Aufgabe des Synchronisierens von Anzeigeelementen. Zudem kann es nicht dazu kommen, dass durch Latenzen die Blinkphasen der Busteilnehmer zwar konstant bzw. starr, aber deutlich sichtbar gegeneinander verschoben wären.

Das neue Verfahren kann beispielsweise bei der Implementierung auf Steuereinheiten in Form von Mikrokontrollern ohne spezielle Peripherie (z.B. ohne Pulsweitenmodulation (PWM), Timer, oder ähnlichem) und/oder ohne Bibliotheksfunktionen (z.B. Fließkommaalgorithmik) auskommen. Beispielsweise kann das neue Verfahren mit Standard-Gleitzahloperationen umgesetzt werden, insbesondere in der Unterbrechung, in der ohnehin ein zyklischer Prozessdatenaustausch und/oder eine Abfrage des Busnachrichtenzählers statt findet.

Insgesamt werden ein Verfahren zum Synchronisieren von Anzeigeelementen in einem Steuerungssystem sowie ein entsprechendes Steuerungssystem bereitgestellt, bei dem insbesondere die Anzeigeelemente auf einfache und/oder kostengünstigere Art und Weise synchronisiert werden, da vorhandene Strukturen bzw. gegebene Mechanismen verwendet werden. Zudem ist das synchrone Blinken oder Blitzen für den Benutzer bzw. Betrachter des Systems angenehm und nicht irritierend, so dass die Benutzerfreundlichkeit erhöht wird. Auch kann der Benutzer eine einfache "First-level" Diagnose durch Betrachten der Anzeigeelemente durchführen. Die oben genannte Aufgabe ist daher vollständig gelöst.

In einer Ausgestaltung speichert der Nachrichtenempfänger jeweils das definierte Busnachrichtenzeitintervall und/oder den definierten Wertebereich.

In dieser Ausgestaltung sind das Busnachrichtenzeitintervall und/oder der definierte Wertebereich im Nachrichtenempfänger fest definiert. Somit wird gewährleistet, dass, zumindest während des Betriebs der Buskommunikation, alle Nachrichtenempfänger das Busnachrichtenzeitintervall und/oder den definierte Wertebereich kennen. Auch wird so gewährleistet, dass, zumindest während des Betriebs der Buskommunikation, das Busnachrichtenzeitintervall und/oder der definierte Wertebereich konstant bleibt bzw. bleiben. Insbesondere kann der Nachrichtenempfänger jeweils sowohl das Busnachrichtenzeitintervall als auch den definierte Wertebereich speichern. Beispielsweise kann das definierte Busnachrichtenzeitintervall und/oder der definierte Wertebereich in einer Speichereinheit gespeichert sein. Beispielsweise kann das definierte Busnachrichtenzeitintervall und/oder der definierte Wertebereich hartkodiert sein oder bei Initialisierung des Nachrichtenempfängers gespeichert werden, insbesondere vor dem Betrieb der Buskommunikation. Beispielsweise kann das definierte Busnachrichtenzeitintervall und/oder der definierte Wertebereich von einem externen Sender, wie dem Nachrichtensender, über den Bus empfangen werden.

In einer weiteren Ausgestaltung zählt die Steuereinheit jeweils die Anzahl der Busnachrichtenzähler in einem definierten Zeitraum und ermittelt anhand dieser Anzahl und des definierten Zeitraums das Busnachrichtenzeitintervall.

In dieser Ausgestaltung muss das Busnachrichtenzeitintervall nicht von einer externen Quelle vorgegeben werde, sondern der Nachrichtenempfänger bzw. dessen Steuereinheit kann sich jeweils das Busnachrichtenzeitintervall selber ermitteln. Dies erhöht die Flexibilität des Steuerungssystems. Dies ist insbesondere von Nutzen, wenn ein neuer Nachrichtenempfänger mit dem Bus verbunden wird, der das Busnachrichtenzeitintervall noch nicht gespeichert hat. Auch wenn sich beispielsweise das Busnachrichtenzeitintervall ändert, muss nicht jeder Nachrichtenempfänger neu hartkodiert oder initialisiert werden.

In einer weiteren Ausgestaltung speichert der Nachrichtenempfänger jeweils eine gewünschte Ein-/Aus-Periode und/oder einen gewünschten Tastgrad. Der Tastgrad ist insbesondere das Verhältnis der Dauer des eingeschalteten Zustands zur Ein-/Aus-Periode.

In dieser Ausgestaltung sind eine gewünschte Ein-/Aus-Periode und/oder ein gewünschter Tastgrad im Nachrichtenempfänger fest definiert. Somit wird gewährleistet, dass, zumindest während des Betriebs der Buskommunikation, alle Nachrichtenempfänger die gewünschte Ein-/Aus-Periode und/oder einen gewünschtes Tastgrad kennen. Auch wird so gewährleistet, dass, zumindest während des Betriebs der Buskommunikation, die gewünschte Ein-/Aus-Periode und/oder der gewünschte Tastgrad konstant bleibt bzw. bleiben. Beispielsweise kann die gewünschte Ein-/Aus-Periode und/oder der gewünschte Tastgrad in einer Speichereinheit gespeichert sein. Beispielsweise kann die gewünschte Ein-/Aus-Periode und/oder der gewünschte Tastgrad hartkodiert sein oder bei Initialisierung des Nachrichtenempfängers gespeichert werden, insbesondere vor dem Betrieb der Buskommunikation. Beispielsweise kann die gewünschte Ein-/Aus-Periode und/oder der gewünschtes Tastgrad von einem externen Sender, wie dem Nachrichtensender, über den Bus empfangen werden. Insbesondere kann der Nachrichtenempfänger jeweils sowohl die gewünschte Ein-/Aus-Periode als auch den gewünschten Tastgrad speichern. In dieser Ausgestaltung kann sowohl ein gewünschter Tastgrad als auch eine gewünschte Ein-Aus-Periode erzielt werden. Der Tastgrad bzw. das Verhältnis ist insbesondere kleiner oder gleich eins. Beispielsweise hat Blinken einen Tastgrad von 1/2, d.h. Dauer des eingeschalteten Zustands und des ausgeschalteten Zustands sind gleich. Beispielsweise hat Blitzen einen Tastgrad kleiner als 1/2 (z.B. 1/4 oder 1/5), d.h. die Dauer des eingeschalteten Zustands ist kürzer als die Dauer des ausgeschalteten Zustands.

In einer weiteren Ausgestaltung wird beim Auswerten eine definierte Umschaltgrenze verwendet, die das Produkt aus dem Wertebereich und dem gewünschten Tastgrad ist. Der Tastgrad ist insbesondere das Verhältnis der Dauer des eingeschalteten Zustands zur Ein-/Aus-Periode.

In einer weiteren Ausgestaltung wertet die Steuereinheit jeweils den Busnachrichtenzähler durch einfache Ganzzahldivisionen aus.

In dieser Ausgestaltung kann das Auswerten auf einfache Art und Weise erfolgen bzw. der Steuerungsalgorithmus ist in einfacher Weise implementiert. Vorzugsweise erzeugt die Steuereinheit das Steuersignal durch einfache wenn/dann-Entscheidung (oder auch if/else genannt). Vorzugsweise benutzt der Steuerungsalgorithmus also einfache Ganzzahldivisionen und/oder wenn/dann-Entscheidungen. Dies stellt eine einfache Implementierung dar und somit ein kostengünstiges System bereit.

In einer weiteren Ausgestaltung wird beim Auswerten eine Wertebereichperiode verwendet, die das Produkt aus Wertebereich und Busnachrichtenzeitintervall ist. Insbesondere ist die Wertebereichperiode durch die bestimmte Ein-/Aus-Periode ganzzahlig teilbar.

In dieser Ausgestaltung wird durch die Wertebereichperiode der Zeitraum ermittelt, wie lange es dauert bis der Wert des Busnachrichtenzählers einmal seinen gesamten Wertebereich durchgezählt bzw. durchlaufen hat. Insbesondere kann die Steuereinheit jeweils die Wertebereichperiode ermitteln. Dadurch dass die Wertebereichperiode durch die bestimmte, d.h. tatsächliche, Ein-/Aus-Periode ganzzahlig teilbar ist, wird erreicht, dass die Ein-/Aus-Periode ganzzahlig in die Wertebereichperiode passt und somit kein Rest bleibt. Mit Erreichen des Endes des Wertebereichs endet dann auch die Ein-/Aus-Periode bzw. das Blinken oder Blitzen. Es kann damit niemals vorkommen, dass Anzeigelemente gegenläufig bzw. asynchron zueinander blinken oder blitzen, oder dass unerwünschte An- oder Auszeiten entstehen. Zudem kann ein Nachrichtenempfänger, der neu mit dem Bus verbunden wird, sofort den Zustand seines Anzeigelements ermitteln, und das Anzeigelement ist beim nächsten Steuersignal synchron mit den anderen Anzeigelementen. Wenn die ganze Zahl eins ist, dann wird der Wertebereich des Busnachrichtenzählers in genau eine Ein-/Aus-Periode aufgeteilt bzw. der Wertebereich ist gleich der Ein-/Aus-Periode. Wenn die ganze Zahl ein Vielfaches (d.h. größer als eins) ist, dann wird der Wertebereich des Busnachrichtenzählers in mehrere Ein-/Aus-Perioden aufgeteilt.

In einer weiteren Ausgestaltung ist die Wertebereichperiode ein ganzzahliges Vielfaches der bestimmten Ein-/Aus-Periode. Insbesondere definiert das ganzzahlige Vielfache einen Skalierungsfaktor.

In dieser Ausgestaltung wird der Wertebereich des Busnachrichtenzählers in mehrere Ein-/Aus-Perioden aufgeteilt. Mit anderen Worten ist die bestimmte Ein-/Aus-Periode ein ganzzahliger Teil der Wertebereichperiode. Es passen also mehrere Ein-/Aus-Perioden in den Wertebereich. Es wird so gewährleistet, dass die Ein-/Aus-Periode ganzzahlig in die Wertebereichperiode passt und somit kein Rest bleibt. Mit Erreichen des Endes des Wertebereichs endet dann auch die Ein-/Aus-Periode bzw. das Blinken oder Blitzen. In dieser Ausgestaltung kann, zumindest annähernd, sowohl der gewünschte Tastgrad als auch die gewünschte Ein-/Aus-Periode erzielt werden. Die bestimmte, d.h. tatsächliche, Ein-/Aus-Periode kann dabei von der gewünschten Ein-/Aus-Periode abweichen, wenn die Wertebereichperiode kein ganzzahliges Vielfaches der gewünschten Ein-/Aus-Periode ist. Die gewünschte Ein-/Aus-Periode wird "künstlich gestreckt oder verkürzt bzw. die Ein-/Aus-Periode wird in die Wertebereichperiode eingepasst.

In einer weiteren Ausgestaltung ermittelt die Steuereinheit jeweils die Wertebereichperiode als Produkt aus Wertebereich und Busnachrichtenzeitintervall. Die Steuereinheit ermittelt jeweils den Quotient aus Wertebereichperiode und der gewünschten Ein-/Aus-Periode. Die Steuereinheit führt jeweils eine Ganzzahlrundung dieses Quotienten durch, deren Rundungsergebnis einen Skalierungsfaktor definiert.

In dieser Ausgestaltung wird eine einfache Implementierung bereitgestellt, wie der Wertebereich des Busnachrichtenzählers in mehrere Ein-/Aus-Perioden aufgeteilt werden kann bzw. wie die bestimmte Ein-/Aus-Periode ein ganzzahliger Teil der Wertebereichperiode sein kann. Es wird so gewährleistet, dass die Ein-/Aus-Periode ganzzahlig in die Wertebereichperiode passt und somit kein Rest bleibt. Mit Erreichen des Endes des Wertebereichs endet dann auch die Ein-/Aus-Periode bzw. das Blinken oder Blitzen. In dieser Ausgestaltung kann, zumindest annähernd, sowohl der gewünschte Tastgrad als auch die gewünschte Ein-/Aus-Periode erzielt werden. Die bestimmte, d.h. tatsächliche, Ein-/Aus-Periode kann dabei von der gewünschten Ein-/Aus-Periode abweichen, wenn die Wertebereichperiode kein ganzzahliges Vielfaches der gewünschten Ein-/Aus-Periode ist.

In einer weiteren Ausgestaltung wertet die Steuereinheit jeweils den Busnachrichtenzähler derart aus, dass der Modulo aus Wert des Busnachrichtenzählers durch den Quotienten aus Wertebereich und Skalierungsfaktor mit dem Quotienten aus definierter Umschaltgrenze und Skalierungsfaktor verglichen wird. Das Steuersignal wird insbesondere erzeugt, wenn der Modulo den Quotienten aus definierter Umschaltgrenze und Skalierungsfaktor überschreitet oder unterschreitet.

In dieser Ausgestaltung wird eine einfache Implementierung bereitgestellt, wie das Steuersignal erzeugt werden kann, insbesondere wenn der Wertebereich in mehrere Ein-/Aus-Perioden aufgeteilt ist. Insbesondere kann das Anzeigelement in den eingeschalteten Zustand versetzt sein, wenn oder solange der Modulo kleiner als der Quotient aus definierter Umschaltgrenze und Skalierungsfaktor ist, und/oder das Anzeigeelement kann in den ausgeschalteten Zustand versetzt sein, wenn oder solange der Modulo größer als der Quotient aus definierter Umschaltgrenze und Skalierungsfaktor ist. Der Modulo ist der Rest der Division.

In einer weiteren Ausgestaltung wertet die Steuereinheit jeweils den Busnachrichtenzähler derart aus, dass der Modulo aus Wert des Busnachrichtenzählers durch Wertebereich mit der definierten Umschaltgrenze verglichen wird. Das Steuersignal wird erzeugt, wenn der Modulo die definierte Umschaltgrenze überschreitet oder unterschreitet.

Diese Ausgestaltung findet insbesondere Anwendung, wenn der Wertebereich des Busnachrichtenzählers in genau eine Ein-/Aus-Periode aufgeteilt ist bzw. der Wertebereich gleich der Ein-/Aus-Periode ist. Mit Erreichen des Endes des Wertebereichs endet dann auch die Ein-/Aus-Periode bzw. das Blinken oder Blitzen. In diesem Fall ist der Skalierungsfaktor eins. Der Skalierungsfaktor muss daher bei der Auswertung nicht berücksichtigt werden. Es wird so eine einfachste Form der Implementierung des synchronen Blinkens oder Blitzens bereitgestellt. In dieser Ausgestaltung kann, zumindest annähernd, ein gewünschter Tastgrad erzielt werden. Die bestimmte, d.h. tatsächliche, Ein-/Aus-Periode hingegen ist abhängig von dem definierten Wertebereich und dem Busnachrichtenzeitintervall. Beispielsweise kann, wenn der Modulo oder der Wert des Busnachrichtenzählers die fest definierte Umschaltgrenze überschreitet, das Steuersignal erzeugt werden, das das Anzeigelement vom eingeschalteten in den ausgeschalteten Zustand versetzt, und/oder das Steuersignal, das das Anzeigelement vom ausgeschalteten Zustand wieder in den eingeschalteten Zustand versetzt, kann spätestens dann erzeugt, wenn der Wert des Busnachrichtenzählers wieder zurück gesetzt wird.

In einer weiteren Ausgestaltung wird der Wertebereich an das Busnachrichtenzeitintervall und/oder die Ein-/Aus-Periode angepasst.

In dieser Ausgestaltung kann verhindert werden, dass die letzten Werte des Wertebereichs "übrig" bleiben bzw. ein Rest bleibt. Beispielsweise kann der Wertebereich so gewählt werden, dass die Wertebereichperiode größer oder mindestens gleich der Ein-/Aus-Periode ist. Auch wenn der ursprüngliche Wertebereich durch die vorgesehene oder definierte Größe des Busnachrichtenzählers in der Busnachricht festgelegt ist, kann der Wertebereich angepasst werden. Insbesondere kann der neue Wertebereich kleiner sein als der durch die Größe definierte maximale Wertebereich.

In einer weiteren Ausgestaltung gibt die bestimmte Ein-/Aus-Periode, mit der das Anzeigelement jeweils abwechselnd in den eingeschalteten und den ausgeschalteten Zustand versetzt wird, einen aktuellen Betriebszustand in dem Steuerungssystem an, insbesondere einen Fehlerzustand in dem Steuerungssystem.

In dieser Ausgestaltung ist die bestimmte Ein-/Aus-Periode ein Indikator für einen bestimmten Betriebszustand in dem Steuerungssystem. Es ist so eine Diagnose möglich. Beispielsweise kann der Benutzer eine einfache "First-level" Diagnose durch Betrachten der Anzeigeelemente, die synchron zueinander blinken oder blitzen, durchführen.

In einer weiteren Ausgestaltung werden bei einem ersten Satz von Nachrichtenempfängern die Anzeigelemente synchron zueinander mit einer ersten bestimmten Ein-/Aus-Periode abwechselnd in den eingeschalteten und den ausgeschalteten Zustand versetzt, und bei einem zweiten Satz von Nachrichtenempfängern werden die Anzeigelemente synchron zueinander mit einer zweiten bestimmten Ein-/Aus-Periode abwechselnd in den eingeschalteten und den ausgeschalteten Zustand versetzt.

In dieser Ausgestaltung können mehrere Betriebsmodi angezeigt werden. Dies erhöht die Diagnosemöglichkeiten des Steuerungssystems. Insbesondere kann für jede bestimmte Ein-/Aus-Periode die Steuereinheit die entsprechenden Auswertung bzw. Berechnungen durchführen. Beispielsweise kann die erste Ein-/Aus-Periode eine Blinkperiode sein und die zweite Ein-/Aus-Periode eine Blitzperiode sein. Beispielsweise können die erste und zweite bestimmte Ein-/Aus-Periode aber auch verschiedene Blinkperioden oder verschiedene Blitzperioden sein.

In einer weiteren Ausgestaltung ist das Busnachrichtenzeitintervall kleiner als 10 ms, insbesondere kleiner als 1000 $\mu$s, insbesondere kleiner als 100 $\mu$s, insbesondere kleiner als 70 $\mu$s.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen:

Fig. 1   eine vereinfachte Darstellung eines Steuerungssystems zur automatisierten bzw. sicherheitsrelevanten Steuerung einer technischen Anlage, wobei ein Ausführungsbeispiel des neuen Verfahrens und des neuen Busnachrichtenempfängers zur Anwendung kommen,

Fig. 2   eine Frontansicht eines Gehäuses eines Ausführungsbeispiels eines Busnachrichtenempfängers,

Fig. 3   den zeitlichen Verlauf des Zustands der Anzeigeelemente gemäß eines ersten Ausführungsbeispiels des Verfahrens,

Fig. 4   den zeitlichen Verlauf des Zustands der Anzeigeelemente gemäß eines zweiten Ausführungsbeispiels des Verfahrens,

Fig. 5   den zeitlichen Verlauf des Zustands der Anzeigeelemente gemäß eines zweiten Ausführungsbeispiels des Verfahrens, und

Fig. 6   den zeitlichen Verlauf des Zustands der Anzeigeelemente gemäß eines zweiten Ausführungsbeispiels des Verfahrens.

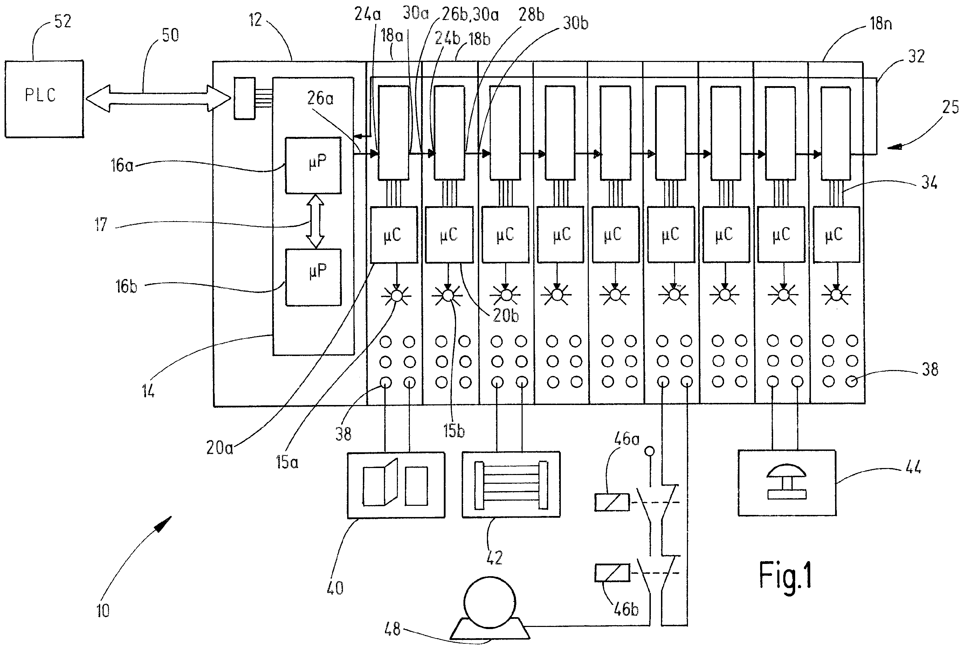

Fig. 1 zeigt eine vereinfachte Darstellung eines Steuerungssystems 10 zur automatisierten bzw. sicherheitsrelevanten Steuerung einer technischen Anlage, wobei ein Ausführungsbeispiel des neuen Verfahrens und des neuen Busnachrichtenempfängers zur Anwendung kommen.

Das Steuerungssystem 10 ist in diesem Fall ein modulares Steuerungssystem, das zur automatisierten Steuerung einer technischen Anlage dient. Beispielsweise ist die technische Anlage eine Produktionslinie eines Autoherstellers, ein Transportband an einem Flughafen oder eine andere Anlage, von deren Betrieb eine Gefahr für Personen im Umfeld der Anlage ausgeht. In den bevorzugten Ausführungsbeispielen ist das Steuerungssystem in der Lage, sicherheitsrelevante Funktionen und Standardfunktionen zu steuern. Letzteres sind Funktionen, die den normalen Betriebsablauf der Anlage betreffen. Ersteres sind Funktionen, die vor allem dazu dienen, Unfälle und Verletzungen durch den Betrieb der Anlage zu vermeiden. Prinzipiell kann das neue Verfahren und der entsprechende Busnachrichtenempfänger jedoch auch bei anderen Steuerungssystemen eingesetzt werden, insbesondere Steuerungen, die ausschließlich normale Betriebsfunktionen einer Anlage steuern, oder bei reinen Sicherheitssteuerungen, die ausschließlich Sicherheitsfunktionen steuern.

Das Steuerungssystem 10 umfasst eine Mehrzahl von über einen Bus 25 verbundenen Teilnehmern. Die Teilnehmer umfassen zumindest einen Nachrichtensender 12 und eine Anzahl von Nachrichtenempfängern 18a, 18b, ..., 18n. Zur Vereinfachung wird nun nur auf den ersten Nachrichtenempfänger 18a und den zweiten Nachrichtenempfänger 18b eingegangen. Jeder Nachrichtenempfänger 18a, 18b umfasst ein Anzeigeelement 15a, 15b, das zeitlich abwechselnd in einen eingeschalteten und einen ausgeschalteten Zustand versetzbar ist. Mit anderen Worten umfasst der erste Nachrichtenempfänger ein erstes Anzeigelement 15a und der zweite Nachrichtenempfänger 18b umfasst ein zweites Anzeigelement 15b. Jeder Nachrichtenempfänger 18a, 18b umfasst weiterhin eine Steuereinheit 20a, 20b zum Erzeugen eines Steuersignals, das das Anzeigelement 15a, 15b zwischen den Zuständen umschaltet. Mit anderen Worten umfasst der erste Nachrichtenempfänger 18a eine erste Steuereinheit 20a und der zweite Nachrichtenempfänger 18b umfasst eine zweite Steuereinheit 20b. Das von der Steuereinheit erzeugte Steuersignal schaltet das Anzeigelement 15 entweder von dem eingeschalteten in den ausgeschalteten Zustand oder von dem ausgeschalteten in den eingeschalteten Zustand. Durch dieses Steuersignal wird das Anzeigelement 15a, 15b somit ein- oder ausgeschaltet. Beispielsweise kann eine Strom- oder Energiequelle und ein damit verbundenes Schaltelement (z.B. Transistor) verwendet werde, das von dem Steuersignal gesteuert wird. Im eingeschalteten Zustand wird das Anzeigeelement dann bestromt und es leuchtet, während es im ausgeschalteten Zustand unbestromt ist und daher nicht leuchtet. Es kann jedoch auch jede andere bekannte und geeignete Art der Ansteuerung eines Anzeigelements verwendet werden.

In dem bevorzugten Ausführungsbeispiel ist das Anzeigelement 15a, 15b eine lichtemittierende Diode (LED). Diese ermöglicht eine einfache und kostengünstige Diagnosemöglichkeit. Alternativ kann das Anzeigelement aber auch jede andere Art von Anzeigelement sein, das zeitlich abwechselnd in einen eingeschalteten und einen ausgeschalteten Zustand versetzbar ist bzw. blinken und/oder blitzen kann, beispielsweise eine andere Art von Leuchtmittel.

Die bestimmte Ein-/Aus-Periode $T_{ea}$, mit der jedes Anzeigelement 15 abwechselnd in den eingeschalteten und den ausgeschalteten Zustand versetzt wird, gibt einen aktuellen Betriebszustand in dem Steuerungssystem 10 an, insbesondere einen Fehlerzustand in dem Steuerungssystem. Die bestimmte Ein-/Aus-Periode ist somit ein Indikator für einen bestimmten Betriebszustand in dem Steuerungssystem 10. Der Benutzer kann beispielsweise eine einfache "First-level" Diagnose durch Betrachten der Anzeigeelemente 15, die synchron zueinander blinken oder blitzen, durchführen. Es ist natürlich auch möglich, dass mehrere Betriebsmodi gleichzeitig angezeigt werden. Beispielsweise kann die erste Ein-/Aus-Periode eine Blinkperiode sein und die zweite Ein-/Aus-Periode eine Blitzperiode sein. Beispielsweise kann ein Satz von Nachrichtenempfängern mit einer ersten bestimmten Ein-/Aus-Periode blinken oder blitzen, und ein zweiter Satz von Nachrichtenempfängern kann mit einer zweiten bestimmten Ein-/Aus-Periode blinken oder blitzen. Die erste Ein-/Aus-Periode und die zweite Ein-/Aus-Periode geben dabei verschiedene Betriebsmodi an.

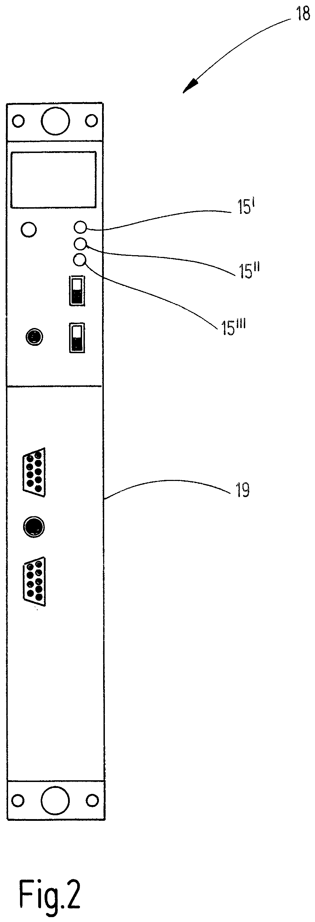

Fig. 2 zeigt eine Frontansicht eines Gehäuses eines Ausführungsbeispiels eines Busnachrichtenempfängers 18, beispielsweise eines Busnachrichtenempfängers 18a, 18b, ..., 18n der Fig. 1. Die Anzeigelemente sind in dem in Fig. 2 gezeigten Beispiel lichtemittierende Dioden. Die Anzeigelemente bzw. lichtemittierenden Dioden sind in entsprechenden Aussparungen in dem Gehäuse 19 des Nachrichtenempfängers 18 angeordnet. Die lichtemittierenden Dioden können jeweils mit einer oder mehreren Ein-/Aus-Perioden abwechselnd in den ein- und ausgeschalteten Zustand versetzt werden, d.h. blinken und/oder blitzen. Alternativ können die lichtemittierenden Dioden aber auch jeweils dauerhaft im eingeschalteten Zustand sein, d.h. dauerhaft oder kontinuierlich leuchten. Die erste und zweite lichtemittierende Diode zeigt jeweils einen Betriebszustand des Steuerungssystems an, in Fig. 2 mit "RUN ST" für ein Standard-Teil" und "RUN FS" für ein Fail-Safe-Teil gekennzeichnet. Die dritte lichtemittierende Diode ist dauerhaft im eingeschalteten Zustand (d.h. leuchtet), wenn Versorgungsspannung anliegt, in Fig. 2 mit "POWER" gekennzeichnet.

Wieder zurückkehrend zu Fig. 1 ist in diesem Ausführungsbeispiel der Nachrichtensender hier ein Kopfteil 12 (auch Kopfmodul genannt), das in diesem Fall eine fehlersichere Auswerte- und Steuereinheit 14 aufweist. In den bevorzugten Ausführungsbeispielen besitzt die Auswerte- und Steuereinheit 14 zumindest zwei Prozessoren 16a, 16b, die ein Steuerprogramm redundant zueinander ausführen und sich gegenseitig überwachen. Dies ist in Fig. 1 durch einen Doppelpfeil 17 vereinfacht dargestellt. Fehlersicher bedeutet hier, dass das Kopfteil 12 zumindest die Anforderungen gemäß SIL2 der internationalen Norm IEC 61508 und/oder die Anforderungen PL d gemäß der Norm EN ISO 13849-1 oder vergleichbare Anforderungen erfüllt.

In dem Ausführungsbeispiel der Fig. 1 sind die Nachrichtenempfänger hier eine Reihe von E/A-Einheiten 18a, 18b, ..., 18n (auch Ein-/Ausgabemodule genannt). Die E/A-Einheiten 18 dienen zur Aufnahme und Ausgabe von Signalen, mit denen das Steuerungssystem 10 den Betrieb der Anlage beeinflusst.

In einem bevorzugten Ausführungsbeispiel sind die E/A-Einheiten 18 elektrisch und mechanisch mit dem Kopfteil 12 verbunden, wie dies in Fig. 1 vereinfacht dargestellt ist. In diesem Fall sind die Anzeigelemente 15 der E/A-Einheiten räumlich nahe beieinander angeordnet, so dass ein, für das menschliche Auge bzw. das Auge des Benutzer, "synchrones" Blinken wichtig ist. In anderen Ausführungsbeispielen ist es aber auch möglich, dass die E/A-Einheiten 18 getrennt von dem Kopfteil 12 bzw. getrennt von einer dem Kopfteil 12 entsprechenden Steuerung angeordnet sind und lediglich über eine nachfolgend näher erläuterte Kommunikationsverbindung mit dem Kopfteil 12 kommunizieren.

Jede E/A-Einheit 18 weist eine zuvor genannte Steuereinheit 20 auf, die beispielsweise mit Hilfe eines Mikrocontrollers realisiert ist. Anstelle eines Mikrocontrollers kann die Steuereinheit 20 auch als ASIC, als FPGA, mit Hilfe von leistungsfähigeren Mikroprozessoren oder mit vergleichbaren Logikbausteinen (z.B. CPLD) realisiert sein.

Die Steuereinheit 20 ist dazu ausgebildet den Busnachrichtenzähler in der aktuellen Busnachricht auszuwerten und in Abhängigkeit davon das Steuersignal zu erzeugen. Mit anderen Worten ist die erste Steuereinheit 20a dazu ausgebildet den Busnachrichtenzähler in der aktuellen Busnachricht auszuwerten und in Abhängigkeit davon ein erstes Steuersignal für das erste Anzeigelement 15a zu erzeugen, und die zweite Steuereinheit 20a ist dazu ausgebildet den Busnachrichtenzähler in der aktuellen Busnachricht auszuwerten und in Abhängigkeit davon ein zweites Steuersignal für das zweite Anzeigelement 15b zu erzeugen. Die Auswertung erfolgt dabei in gleicher Weise.

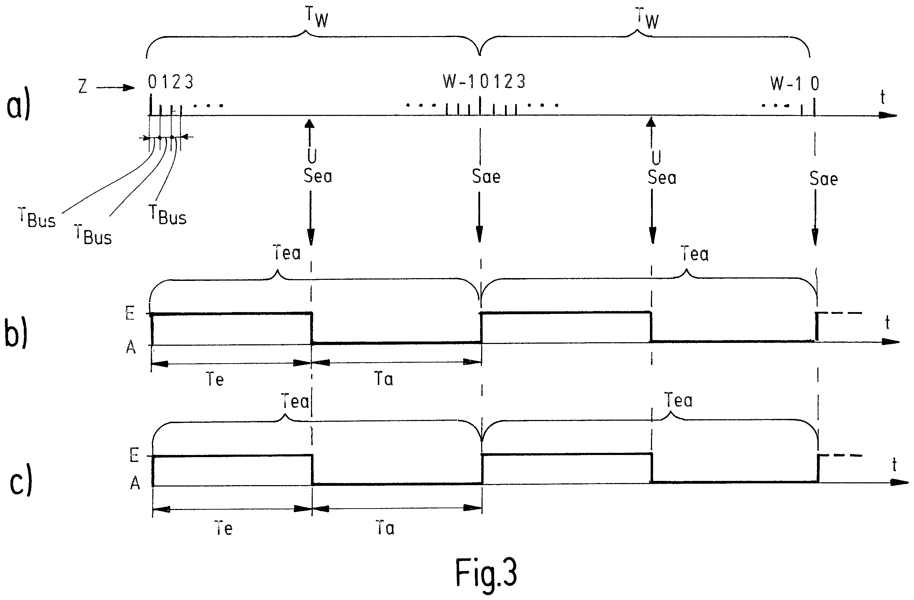

Insbesondere hat jede Steuereinheit 20a, 20b einen Steuerungsalgorithmus (auch Steuerungslogik oder Steuerungsprogramm genannt) darin implementiert. Mit diesem Steuerungsalgorithmus wird der Busnachrichtenzähler ausgewertet. Der Steuerungsalgorithmus in jeder der Steuereinheiten 20a, 20b ist gleich. Mit anderen Worten wertet die erste 20a Steuereinheit des ersten Nachrichtenempfängers 18a den Busnachrichtenzähler mit einem ersten Steuerungsalgorithmus aus, und die Steuereinheit 20b des zweiten Nachrichtenempfängers 18b wertet den Busnachrichtenzähler mit einem zweiten Steuerungsalgorithmus aus, wobei der erste und zweite Steuerungsalgorithmus gleich sind. Abhängig vom Ergebnis der Auswertung bzw. des Steuerungsalgorithmus wird dann das Steuersignal zum Steuern des entsprechenden Anzeigeelements 15a, 15b erzeugt. Das Steuersignal zum Steuern des ersten Anzeigelements 15a und das Steuersignal zum Steuern des zweiten Anzeigelements 15b werden zur quasi gleichen Zeit erzeugt. Somit werden das erste Anzeigelement 15a und das zweite Anzeigelement 15b zur gleichen Zeit in den gleichen Zustand (eingeschalteter oder ausgeschalteter Zustand) versetzt. Das erste Anzeigelement 15a und das 15b werden also synchron zueinander mit der bestimmten Ein-/Aus-Periode $T_{ea}$ abwechselnd in den ein- und ausgeschalteten Zustand versetzt. Mit anderen Worten, die Anzeigelemente 15a, 15b blinken oder blitzen. Dies wird nachfolgend detaillierter mit Bezug auf Fig. 3 bis Fig. 6 näher erläutert werden.

Um mehrere Betriebsmodi zu realisieren, können der erste und zweite Nachrichtenempfänger 15a, 15b, d.h. ein erster Satz von Nachrichtenempfängern, eine erste gewünschte Ein/Aus-Periode und/oder einen ersten gewünschten Tastgrad gespeichert haben und einen ersten, gleichen Steuerungsalgorithmus benutzen, und ein dritter und ein vierter Nachrichtenempfänger, d.h. ein zweiter Satz von Nachrichtenempfängern, können eine zweite gewünschte Ein/Aus-Periode und/oder einen zweiten Tastgrad gespeichert haben. Um beispielsweise eine erste Ein-/Aus-Periode und eine zweite, andere Ein-/Aus-Periode zu erreichen, können der erste und zweite Nachrichtenempfänger eine erste gewünschte Ein-/Aus-Periode speichern und einen ersten, gleichen Steuerungsalgorithmus benutzen und der dritte und vierte Nachrichtenempfänger können eine zweite gewünschte Ein-/Aus-Periode speichern und einen zweiten, gleichen Steuerungsalgorithmus benutzen.

Des Weiteren besitzt im vorliegenden Ausführungsbeispiel jede E/A-Einheit 18 weiterhin eine Kommunikationseinheit 22 (oder auch Busanschaltung genannt). Die Kommunikationseinheit kann beispielsweise als FPGA realisiert sein. Alternativ kann die Kommunikationseinheit auch als Mikrocontroller, als ASIC, mit Hilfe von leistungsfähigeren Mikroprozessoren oder mit vergleichbaren Logikbausteinen (z.B. CPLD) realisiert sein. Prinzipiell ist es möglich, dass die Kommunikationseinheit 22 und die Steuereinheit 20 zu einer gemeinsamen Kommunikations- und Steuereinheit integriert sind und/oder dass die Funktion der Kommunikationseinheit 22 durch geeignete Programmierung eines Mikrocontrollers realisiert ist.

Das Kopfteil 12 und die E/A Einheiten 18 sind über den zuvor genannten Bus 25 miteinander verbunden. Der Nachrichtensender bzw. das Kopfteil 12 ist dazu ausgebildet in einem definierten wiederkehrenden Busnachrichtenzeitintervall $T_{Bus}$ eine jeweils aktuelle Busnachricht über den Bus 25 zu senden. Es liegt also ein "zyklisches" Senden der Busnachrichten bzw. eine zyklische Buskommunikation vor, bei der die Busnachrichtenzeitintervalle konstant sind.

Jede Busnachricht umfasst einen Busnachrichtenzähler. Beispielsweise kann jede Busnachricht Kopfdaten (auch Header genannt) und Nutzdaten umfassen. Der Busnachrichtenzähler kann beispielsweise Bestandteil der Kopfdaten sein. Der Busnachrichtenzähler hat einen Wert Z in einem definierten Wertebereich W. Bei jedem Senden einer aktuellen Busnachricht verändert der Nachrichtensender bzw. das Kopfteil 12 den Wert Z in einer vordefinierten Weise. Nach Erreichen des Endes des Wertebereichs wird der Wert Z zurückgesetzt.

Jeder Nachrichtenempfänger bzw. E/A Einheit 18a, 18b empfängt die gesendeten Busnachrichten über den Bus 25. Die Steuereinheit 20a des ersten Nachrichtenempfängers 20a und die Steuereinheit 20b des zweiten Nachrichtenempfängers 18b empfangen den Busnachrichtenzähler in der aktuellen Busnachricht zur quasi gleichen Zeit. In dem Ausführungsbeispiel der Fig. 1 besitzt die Kommunikationseinheit 22a, 22b jeweils einen Eingang 24a, 24b, an den eine erste Datenleitung 26 angeschlossen ist. Hierüber empfängt die E/A Einheit 18a, 18b die Busnachrichten. Die Kommunikationseinheit 22a, 22b kann die jeweils aktuelle Busnachricht auswerten bzw. verstehen, und entsprechende Informationen, wie den Busnachrichtenzähler, an die Steuereinheit 20a, 20b weiterleiten. Die Steuereinheiten 20a, 20b des ersten und zweiten Nachrichtenempfängers 18a, 18b haben daher die gleiche Einganggröße für den Steuerungsalgorithmus, nämlich den gleichen Busnachrichtenzähler.

In dem in Fig. 1 gezeigten Ausführungsbeispiel besitzt die Kommunikationseinheit 22a, 22b zudem jeweils einen Ausgang 28a, 28b, an den eine zweite Datenleitung 30a, 30b angeschlossen ist (dargestellt in Fig. 1 am Beispiel der E/A-Einheit 18n). In dem bevorzugten Ausführungsbeispiel bilden die erste Datenleitung 26a, 26b und die zweite Datenleitung 30a, 30b zusammen eine serielle Datenleitung, die durch sämtliche Kommunikationsbausteine 22 der E/A-Einheiten 18 geführt ist. In dem dargestellten Ausführungsbeispiel verbindet die serielle Datenleitung die E/A-Einheiten 18 mit dem Kopfteil 12. Vom letzten Kommunikationsbaustein 22 in der Reihe ist eine weitere Datenleitung 32 zurück zur Auswerte- und Steuereinheit 14 des Kopfteils 12 geführt, so dass sich insgesamt ein ringförmiger Bus 25 ergibt, über die die Auswerte- und Steuereinheit 14 des Kopfteils 12 mit den E/A-Einheiten 18 kommunizieren kann.

Das neue Verfahren oder das neue Steuerungssystem ist nicht auf den hier dargestellten ringförmigen Bus beschränkt. Es kann gleichermaßen mit anderen Bustopologien verwendet werden, beispielsweise mit einer einfachen Punkt-zu-Punkt-Verbindung, in einer Sterntopologie, in einer Baumtopologie oder in einer Linientopologie.

Jeder Nachrichtenempfänger 18 kann einen Speicher aufweisen, der die Parameter des definierten Busnachrichtenzeitintervalls $T_{Bus}$ und des definierten Wertebereichs W speichert. Der Speicher des Nachrichtenempfängers kann weiterhin auch die Parameter einer gewünschte Ein-/Aus-Periode $T^*_{ea}$ und/oder eines gewünschten Tastgrads V* (insbesondere kleiner oder gleich eins) speichern. Der Tastgrad V* ist die Dauer des eingeschalteten Zustands zur Ein-/Aus-Periode. Die Parameter können hartkodiert sein oder bei Initialisierung des Nachrichtenempfängers 18 gespeichert werden, insbesondere vor dem Betrieb der Buskommunikation. Beispielsweise kann das definierte Busnachrichtenzeitintervall $T_{Bus}$ und der definierte Wertebereich W von dem Nachrichtensender 12 über den Bus 25 empfangen werden. Alternativ kann sich jeder Nachrichtenempfänger 18 bzw. dessen Steuereinheit 20 das Busnachrichtenzeitintervall $T_{Bus}$ jedoch auch selber ermitteln, indem die Steuereinheit 20 die Anzahl der Busnachrichtenzähler in einem definierten Zeitraum zählt und dann anhand dieser Anzahl und des definierten Zeitraums das Busnachrichtenzeitintervall $T_{Bus}$ ermittelt.

Jede Kommunikationseinheit 22 besitzt hier einen weiteren Ausgang 34, an dem die Kommunikationseinheit 22 Daten für die Steuereinheit 20 zur Verfügung stellt. Insbesondere kann die Kommunikationseinheit 22 so die Busnachrichten mit dem Busnachrichtenzähler der Steuereinheit 20 zur Verfügung stellen. Der Ausgang 34 kann ein Register oder Speicherbereich oder ein logischer Datenübergabepunkt in einem Ablaufprogramm sein, wenn die Kommunikationseinheit 22 in der Steuereinheit 20 integriert ist.

Die Steuereinheit 20 kann nicht nur dazu verwendet werden das Steuersignal für das Anzeigelement zu erzeugen. Die Steuereinheit 20 kann zudem Daten an die Kommunikationseinheit 22 senden. Die Kommunikationseinheit 22 kann die Daten von der Steuereinheit 20 aufnehmen und in den seriellen Datenstrom integrieren, der über den Ausgang 28 zur nächstfolgenden Kommunikationseinheit gesendet wird. Dementsprechend kann der Ausgang 34 eine bidirektionale Eingabe- und Ausgabeschnittstelle sein.

Jede E/A-Einheit 18 besitzt eine Vielzahl von Anschlüssen 38, an denen Sensoren und/oder Aktoren angeschlossen werden können. Beispielhaft sind hier ein Schutztürschalter 40, ein Lichtgitter 42, ein Not-Aus-Taster 44 und zwei Schütze 46a, 46b dargestellt. Mit Hilfe der Schütze 46a, 46b kann das Steuerungssystem 10 die Stromversorgung zu einem elektrischen Motor 48 unterbrechen, wenn beispielsweise der Schutztürsensor 40 signalisiert, dass eine Schutztür geöffnet wurde. Die Sensoren 40, 42, 44 und Aktoren 46, 48 sind hier beispielhaft dargestellt. In der Praxis können weitere Sensoren und/oder Aktoren an das Steuerungssystem 10 angeschlossen sein, etwa Drehzahlsensoren, Temperatursensoren, Positionssensoren oder Magnetventile. Die Steuereinheit 20 kann derart mit den Anschlüssen 38 verbunden sein, dass Daten, die jeweils einen aktuellen Zustand der Sensoren und/oder Aktoren repräsentieren, erzeugt werden.

Die Auswerte- und Steuereinheit 14 des Kopfteils 12 kann über die E/A-Einheiten 18 in den zyklisch wiederkehrenden Busnachrichtenzeitintervallen die Daten einsammeln, die jeweils einen aktuellen Zustand der Sensoren und Aktoren repräsentieren. Anschließend kann die Auswerte- und Steuereinheit 14 die eingesammelten Daten verarbeiten und in Abhängigkeit davon weitere Daten erzeugen, die an die Steuereinheiten 20 der E/A-Einheiten 18 übertragen werden. Die weiteren Daten können beispielsweise einen Steuerbefehl beinhalten, der dazu führt, dass die Stromversorgung für den Motor 48 mit Hilfe der Schütze 46 unterbrochen wird. Des Weiteren können die Daten Informationen beinhalten, die einen aktuellen Zustand der E/A-Einheiten selbst betreffen, insbesondere Diagnoseinformationen und/oder Konfigurationsinformationen.

Das Steuerungssystem 10 kann neben der "internen" Kommunikationsverbindung zu den E/A-Einheiten 18 noch eine externe Kommunikationsverbindung, die in Fig. 1 vereinfacht durch den Doppelpfeil 50 dargestellt ist. Die externe Kommunikationsverbindung kann ein Feldbus sein, über den der Kopfteil 12 mit anderen Einheiten kommuniziert, beispielsweise mit einer anderen Steuerung 52 bzw. Steuerungssystem. Das neue Verfahren eignet sich besonders gut für die zyklische Kommunikation des Kopfteils 12 (bzw. deren Auswerte- und Steuereinheit 14) mit den E/A-Einheiten 18. Das neue Verfahren kann aber auch in dem genannten Feldbus eingesetzt werden.

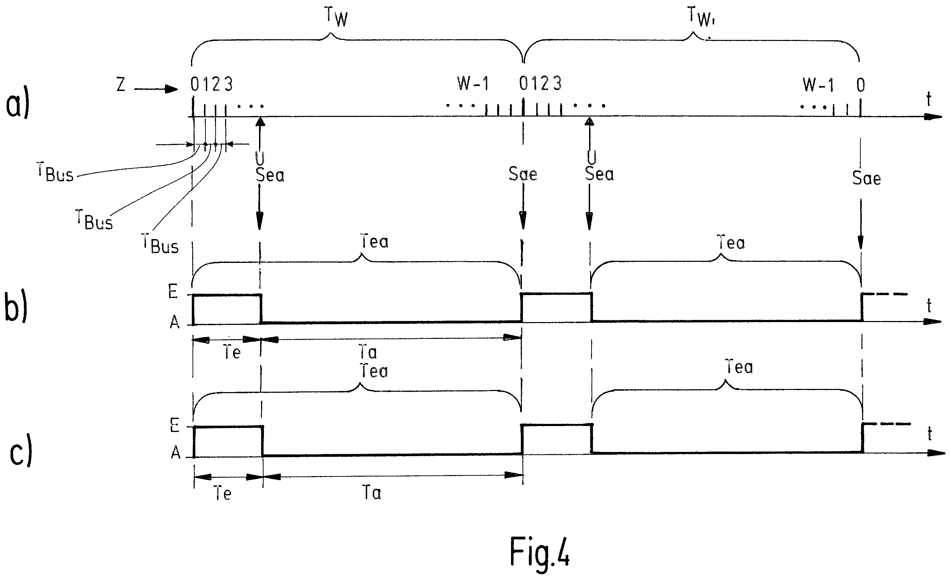

Fig. 3 bis Fig. 6 zeigen jeweils den zeitlichen Verlauf des Zustands der Anzeigeelemente 15a, 15b gemäß verschiedener Ausführungsbeispiele des Verfahrens. In Fig. 3a, Fig. 4a, Fig. 5a und Fig. 6a ist jeweils der Wert Z des Busnachrichtenzählers über die Zeit aufgetragen. In Fig. 3b, Fig. 4b, Fig. 5b, und Fig. 6b ist jeweils der zeitliche Verlauf des Zustands eines Anzeigeelements 15a eines ersten Nachrichtenempfängers 18a gezeigt, und in Fig. 3c, Fig. 4c, Fig.

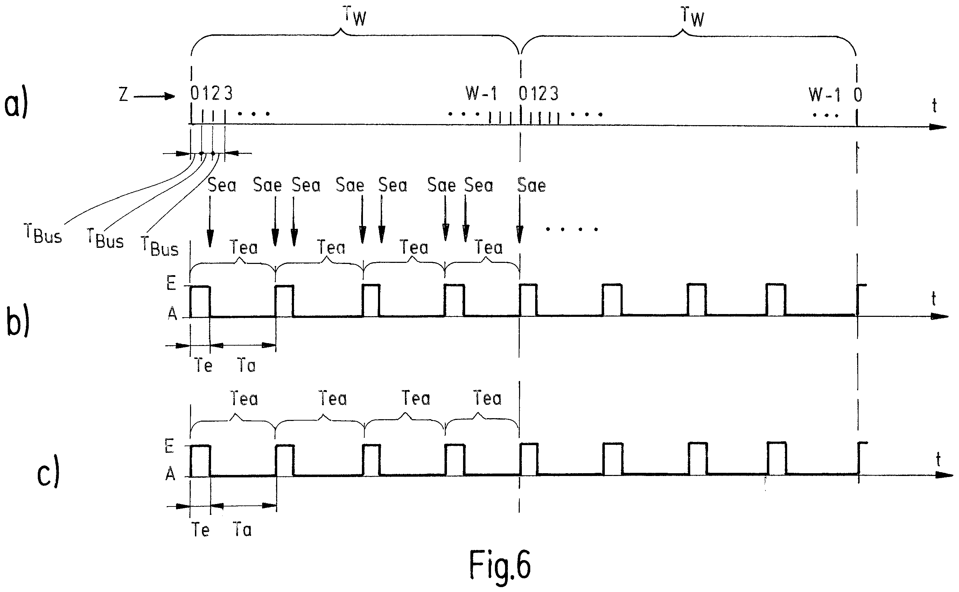

5c, und Fig. 6c ist jeweils der zeitliche Verlauf des Zustands eines Anzeigeelements 15b eines zweiten Nachrichtenempfängers 18b gezeigt. Hierbei ist der eingeschaltete Zustand des entsprechenden Anzeigelements 15a, 15b mit E gekennzeichnet und der ausgeschaltete Zustand ist mit A gekennzeichnet. Die Dauer des eingeschalteten Zustands ist mit $T_e$ bezeichnet und $T_a$ bezeichnet die Dauer des ausgeschalteten Zustands. Eine Dauer $T_e$ und eine Dauer $T_a$ ergeben zusammen die bestimmte bzw. tatsächliche Ein-/Aus-Periode $T_{ea}$.

Wie in Fig. 3a, Fig. 4a, Fig. 5a oder Fig. 6a zu sehen, hat der Busnachrichtenzähler einen Wert Z in einem definierten Wertebereich W, d.h. der Busnachrichtenzähler kann W verschiedene Werte annehmen. In diesen Ausführungsbeispielen läuft der Wert Z von 0 bis W-1. Beispielsweise ergibt sich bei 16 Bit für den Busnachrichtenzähler ein (maximaler) Wertebereich W von 65.536. Bei jedem Senden, d.h. nach (oder im Abstand von) jedem Busnachrichtenzeitintervall $T_{Bus}$, wird der Wert Z in einer vordefinierten Weise geändert. In den gezeigten Ausführungsbeispielen wird bei jedem Senden (im Abstand $T_{Bus}$) der Wert Z um den ganzzahligen Wert eins inkrementiert, von null anfangend. Dementsprechend entspricht der Wert Z 0,1,2, 3, ..., W-1, d.h. bis der (maximale) Wertebereich W erreicht ist. Wenn das Ende dieses Wertebereichs W erreicht ist, wird der Wert Z des Busnachrichtenzählers wieder zurückgesetzt, hier auf seinen Anfangswert null. Eine Wertebereichperiode $T_W$ (oder auch Überlaufperiode genannt) gibt den Zeitraum an, wie lange es dauert bis der Wert Z des Busnachrichtenzählers einmal seinen gesamten Wertebereich W durchgezählt bzw. durchlaufen hat. Die Wertebereichperiode $T_W$ ergibt sich als Produkt aus Wertebereich W und Busnachrichtenzeitintervall $T_{Bus}$. Der Wertebereich W, und somit auch die Wertebereichperiode $T_W$, ist konstant, wie in Fig. 3a, Fig. 4a, Fig. 5a oder Fig. 6a zu sehen

Wie durch den Vergleich der Fig. 3b und 3c, Fig. 4b und 4c, Fig. 5b und 5c oder Fig. 6b und 6c ersichtlich, werden das Anzeigelement 15a des ersten Nachrichtenempfängers 18a und das Anzeigelement 15b des zweiten Nachrichtenempfängers 18b synchron zueinander mit der bestimmten Ein-/Aus-Periode $T_{ea}$ abwechselnd in den eingeschalteten Zustand E und den ausgeschalteten Zustand A versetzt. Die Anzeigelemente 15a, 15b werden also zur gleichen Zeit in den gleichen Zustand (eingeschalteter Zustand E oder ausgeschalteter Zustand A) versetzt, d.h. synchron zueinander. Die Anzeigeelemente 15a, 15b werden mit im Wesentlichen gleicher Ein-/Aus-Periode $T_{ea}$ (bzw. Frequenz) und Phase abwechselnd in den eingeschalteten E und ausgeschalteten Zustand A versetzt. Die Anzeigeelemente blinken oder blitzen also mit synchroner Frequenz und Phase.

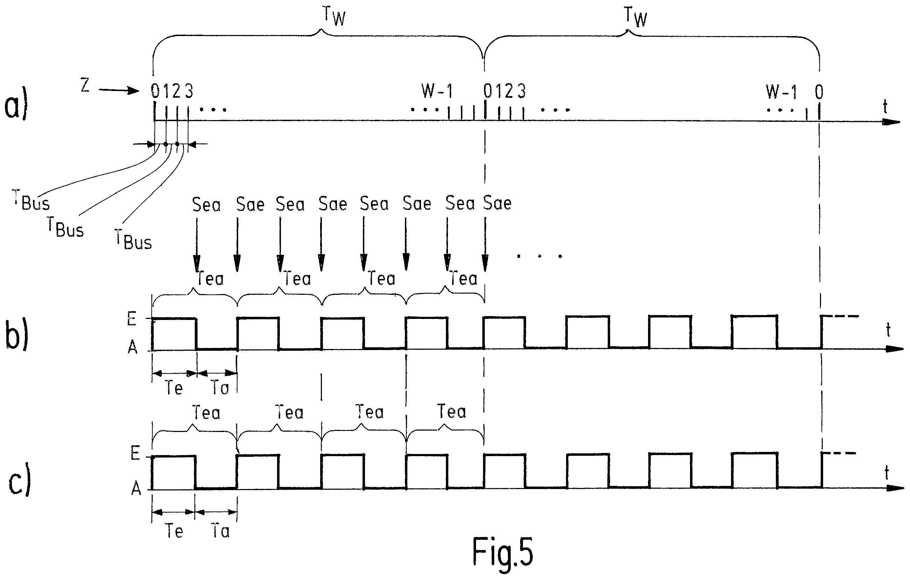

In dem Ausführungsbeispiel der Fig. 3 und dem Ausführungsbeispiel der Fig. 5 beträgt der Tastgrad V, d.h. das Verhältnis der Dauer des eingeschalteten Zustands $T_e$ zur Ein-/Aus-Periode $T_{ea}$, jeweils 1/2. Die Dauer des eingeschalteten Zustands $T_e$ und die Dauer des ausgeschalteten Zustands $T_a$ sind hier also gleich. Somit blinken die Anzeigelemente in jedem dieser Ausführungsbeispiele.

In dem Ausführungsbeispiel der Fig. 4 und dem Ausführungsbeispiel der Fig. 6 ist der Tastgrad V, d.h. das Verhältnis der Dauer des eingeschalteten Zustands $T_e$ zur Ein-/Aus-Periode $T_{ea}$, jeweils kleiner als 1/2, in diesem Fall etwa 1/5. Die Dauer des eingeschalteten Zustands $T_e$ ist hier also kürzer als die Dauer des ausgeschalteten Zustands. Somit blitzen die Anzeigelemente in jedem dieser Ausführungsbeispiele.

In jedem der Ausführungsbeispiele der Fig. 3 bis Fig. 6 ist die Wertebereichperiode $T_W$ durch die bestimmte Ein-/Aus-Periode $T_{ea}$ ganzzahlig teilbar. Dadurch dass die Wertebereichperiode $T_W$ durch die bestimmte, d.h. tatsächliche, Ein-/Aus-Periode $T_{ea}$ ganzzahlig teilbar ist, wird erreicht, dass die Ein-/Aus-Periode $T_{ea}$ ganzzahlig in die Wertebereichperiode W passt und somit kein Rest bleibt. Mit Erreichen des Endes des Wertebereichs W endet dann auch die Ein-/Aus-Periode $T_{ea}$ bzw. das Blinken oder Blitzen.

In dem Ausführungsbeispiel der Fig. 3 und dem Ausführungsbeispiel der Fig. 4 ist die Wertebereichperiode $T_W$ genau einmal durch die Ein-/Aus-Periode $T_{ea}$ (ganzzahlig) teilbar. Die ganze Zahl ist hier also eins. Der Wertebereich W des Busnachrichtenzählers wird also in genau eine Ein-/Aus-Periode $T_{ea}$ aufgeteilt bzw. der Wertebereich W ist gleich der Ein-/Aus-Periode $T_{ea}$. Es passt also genau eine Ein-/Aus-Periode $T_{ea}$ in den Wertebereich W. Mit Erreichen des Endes des Wertebereichs W endet somit auch die Ein-/Aus-Periode $T_{ea}$ bzw. das Blinken oder Blitzen. In dem Ausführungsbeispiel der Fig. 3 und dem Ausführungsbeispiel der Fig. 4 kann der tatsächliche Tastgrad V, zumindest annähernd, dem gewünschten Tastgrad V* entsprechen. Mit anderen Worten kann, zumindest annähernd, ein gewünschter Tastgrad V* erzielt werden. Die bestimmte, d.h. tatsächliche, Ein-/Aus-Periode $T_{ea}$ hingegen ist abhängig von dem definierten Wertebereich W und dem Busnachrichtenzeitintervall $T_{Bus}$.

Wenn die Wertebereichperiode $T_W$ genau einmal durch die Ein-/Aus-Periode $T_{ea}$ (ganzzahlig) teilbar ist, wie in dem Ausführungsbeispiel der Fig. 3 und dem Ausführungsbeispiel der Fig. 4 gezeigt, dann kann die Auswertung bzw. der Steuerungsalgorithmus vorzugsweise wie folgt verlaufen. Der Modulo aus Wert des Busnachrichtenzählers durch Wertebereich wird mit der definierten Umschaltgrenze U verglichen. Das Steuersignal wird erzeugt, wenn der Modulo die definierte Umschaltgrenze erreicht bzw. überschreitet oder unterschreitet. Der Modulo (mit dem Operator % gekennzeichnet) ist der Rest der Division. Die Umschaltgrenze ist hieri das Produkt aus dem Wertebereich W und dem gewünschten Tastgrad V*:

$$U = W \cdot V^*.$$

Diese Auswertung bzw. der Steuerungsalgorithmus kann beispielsweise mit dem folgenden Pseudocode beschrieben werden:

```
Wenn (LED == soll_blinken)
{
        Wenn(Z%W<U)
          {
                LED = ein
        Ansonsten
          {
                LED = aus } }
```

Alternativ kann auch einfach der Busnachrichtenzähler mit einer definierten Umschaltgrenze U verglichen werden, und das Steuersignal wird erzeugt, wenn der Busnachrichtenzähler die definierte Umschaltgrenze U erreicht bzw. überschreitet oder unterschreitet.

In dem Ausführungsbeispiel der Fig. 3 ist die Umschaltgrenze U daher 1/2 · W. Dies bedeutet Blinken der Anzeigelemente bzw. LEDs. In dem Ausführungsbeispiel der Fig. 4 ist die Umschaltgrenze U hingegen 1/5 · W. Dies bedeutetBlitzen der Anzeigelemente bzw. LEDs.

In dem Ausführungsbeispiel der Fig. 3 oder der Fig. 4 wird jede Ein-/Aus-Periode $T_{ea}$ mit dem eingeschalteten Zustand E begonnen. In diesem Fall wird, wenn der Wert Z des Busnachrichtenzählers die Umschaltgrenze U überschreitet, das Steuersignal $S_{ea}$ erzeugt, das das Anzeigelement 15 vom eingeschalteten Zustand E in den ausgeschalteten Zustand A versetzt. Das Steuersignal $S_{ae}$, das das Anzeigelement 15 vom ausgeschalteten Zustand A wieder in den eingeschalteten Zustand E versetzt, wird erzeugt, wenn der Wert Z des Busnachrichtenzählers wieder zurück gesetzt wird.

Zum Besseren Verständnis folgt nun ein spezifisches Beispiel der Auswertung des Busnachrichtenzählers bzw. des Steuerungsalgorithmus anhand des Beispiels der Fig. 3 (Blinken) und Fig. 4 (Blitzen). Es wird hier angenommen, dass der Wertebereich W des Busnachrichtenzählers 65.536 beträgt. Es ergeben sich somit folgende Parameter:

$$W = 65536$$

$$V^*{}_{Blink} = 1/2$$

$$V^*{}_{Blitz} = 1/5.$$

Bei einer Implementierung in einer Steuereinheit bzw. einem Prozessor mit und ohne Gleitkommarechnung würde folgende Berechnung durchgeführt:

$$U_{Blink} = W \cdot V^*{}_{Blink} = 65536 \cdot 1/2 = 32768$$

$U_{Blitz} = W \cdot V^*{}_{Blitz} = 65536 \cdot 1/5 = 13107,2$ (mit Gleitkommarechnung) bzw. 13107 (ohne Gleichkommarechnung).

Der Wert Z läuft von 0 bis W-1, d.h. hier 65535, und wird jeweils um eins inkrementiert. Dementsprechend läuft, dem oben angegebenen Pseudocode nach, auch das Ergebnis des Modulo Z % W von 0 bis 65535. Solange Z % W (d.h. Z % 65536) kleiner als U (d.h. hier 32768 für Blinken) ist das Anzeigeelement bzw. die LED eingeschaltet. Dies ist im Pseudocode durch das Signal LED = ein gekennzeichnet, das den eingeschalteten Zustand angibt. Sobald der Modulo Z % W gleich oder größer als die Umschaltgrenze U(d.h. hier 32768 für Blinken) wird, wird das Anzeigelement bzw. die LED ausgeschaltet. Dies ist im Pseudocode durch das Signal LED = aus gekennzeichnet, das den ausgeschalteten Zustand angibt. Das Steuersignal $S_{ea}$, das das Anzeigelement vom ein- in den ausgeschalteten Zustand versetzt, wird hier also erzeugt, wenn das Signal sich ändert (von LED = ein zu LED = aus).

Im Gegensatz zu Fig. 3 und Fig. 4, ist in dem Ausführungsbeispiel der Fig. 5 und dem Ausführungsbeispiel der Fig. 6 die Wertebereichperiode $T_W$ nicht gleich der Ein-/Aus-Periode $T_{ea}$, sondern vielfach durch die Ein-/Aus-Periode $T_{ea}$ (ganzzahlig) teilbar. Die ganze Zahl ist hier also ein Vielfaches (d.h. größer als eins). Die Wertebereichperiode $T_W$ ist also ein ganzzahliges Vielfaches der bestimmten Ein-/Aus-Periode $T_{ea}$. Somit ist die bestimmte Ein-/Aus-Periode $T_{ea}$ ein ganzzahliger Teil der Wertebereichperiode $T_W$. Der Wertebereich W des Busnachrichtenzählers wird also in mehrere Ein-/Aus-Perioden $T_{ea}$ aufgeteilt. In dem Ausführungsbeispiel der Fig. 5 oder Fig. 6 ist die ganze Zahl 4. Es sollte jedoch verstanden werden, dass dies abhängig von der entsprechenden Implementierung ist.

Wenn die Wertebereichperiode $T_W$ vielfach durch die Ein-/Aus-Periode $T_{ea}$ (ganzzahlig) teilbar ist, wie in dem Ausführungsbeispiel der Fig. 5 und dem Ausführungsbeispiel der Fig. 6 gezeigt, dann kann die Auswertung bzw. der Steuerungsalgorithmus vorzugsweise wie folgt verlaufen. Das ganzzahlige Vielfache definiert einen Skalierungsfaktor F. Der Skalierungsfaktur wird vorzugsweise dadurch ermittelt, dass der Quotient aus Wertebereichperiode $T_W$ und der gewünschten Ein-/Aus-Periode $T^*_{ea}$ ermittelt wird, und es wird dann eine Ganzzahlrundung dieses Quotienten durchgeführt, deren Rundungsergebnis den Skalierungsfaktor F definiert:

$$T_W = W \cdot T_{Bus}$$

$$F = \text{round}(\, T_W / T^*_{ea} \,)$$

bei einem Prozessor mit Gleitkommarechnung, oder

$$F = (T_W + T^*_{ea} / 2) / T^*_{ea}$$

bei einem Prozessor ohne Gleitkommarechnung

Auch wird die Umschaltgrenze, wie zuvor erwähnt, als das Produkt aus dem Wertebereich W und dem gewünschten Tastgrad V* ermittelt:

$$U = W \cdot V^*.$$

Der Modulo aus Wert Z des Busnachrichtenzählers und dem Quotienten aus Wertebereich W und Skalierungsfaktor F wird dann mit dem Quotienten aus definierter Umschaltgrenze U und Skalierungsfaktor F verglichen. Das Steuersignal wird erzeugt, wenn der Modulo den Quotienten aus definierter Umschaltgrenze U und Skalierungsfaktor F erreicht bzw. überschreitet oder unterschreitet.

Diese Auswertung bzw. der Steuerungsalgorithmus kann beispielsweise mit dem folgenden Pseudocode beschrieben werden:

```
Wenn (LED == soll_blinken)
{Wenn (Z% (W / F) < (U / F))
        {
            LED = ein
        }
    Ansonsten
    {
            LED = aus
} }
```

Wie in diesem Pseudocode zu sehen, wird bei jedem Auswerten ein Signal (LED = ein oder LED = aus) erzeugt, das den ein- oder ausgeschalteten Zustand des Anzeigelements angibt. Das Steuersignal $S_{ea}$ oder $S_{ae}$ wird dann erzeugt werden, wenn das Signal sich ändert. Wie in Fig. 5a und Fig. 6a zu sehen, läuft der Wert Z von 0 bis W-1 und wird jeweils um eins inkrementiert. Solange Z % (W / F) kleiner als U/F ist das Anzeigeelement bzw. die LED eingeschaltet. Dies ist im Pseudocode durch das Signal LED = ein gekennzeichnet, das den eingeschalteten Zustand angibt. Sobald der Modulo Z % (W / F) gleich oder größer als die U/F wird, wird das Anzeigelement bzw. die LED ausgeschaltet. Dies ist im Pseudocode durch das Signal LED = aus gekennzeichnet, das den ausgeschalteten Zustand angibt. Das Steuersignal $S_{ea}$, das das Anzeigelement vom ein- in den ausgeschalteten Zustand versetzt, wird hier also erzeugt, wenn das Signal sich von LED = ein zu LED = aus ändert. Das Steuersignal $S_{ae}$, das das Anzeigelement vom aus- in den eingeschalteten Zustand versetzt, wird erzeugt, wenn das Signal sich von LED = aus wieder zu LED = ein ändert.

In dem Ausführungsbeispiel der Fig. 5 oder der Fig. 6 wird jede Ein-/Aus-Periode $T_{ea}$ mit dem eingeschalteten Zustand E begonnen. In diesem Fall wird, jedes Mal wenn der Modulo aus Wert Z durch den Quotienten aus Wertebereich W und Skalierungsfaktor F den Quotienten aus definierter Umschaltgrenze U und Skalierungsfaktor F übersteigt, das Steuersignal $S_{ea}$ erzeugt, das das Anzeigelement 15 vom eingeschalteten Zustand E in den ausgeschalteten Zustand A versetzt. Das Anzeigelement 15 ist in den eingeschalteten Zustand E versetzt, wenn oder solange der Modulo kleiner als der Quotient aus definierter Umschaltgrenze U und Skalierungsfaktor F ist, und das Anzeigeelement 15 ist in den ausgeschalteten Zustand versetzt, wenn oder solange der Modulo gleich oder größer als der Quotient aus definierter Umschaltgrenze U und Skalierungsfaktor F ist.

In dem Ausführungsbeispiel der Fig. 5 oder Fig. 6 kann, zumindest annähernd, sowohl ein gewünschter Tastgrad V* als auch eine gewünschte Ein-/Aus-Periode $T^*_{ea}$ erzielt werden. Die bestimmte, d.h. tatsächliche, Ein-/Aus-Periode $T_{ea}$ kann dabei von der gewünschten Ein-/Aus-Periode $T^*_{ea}$ abweichen, wenn die Wertebereichperiode kein ganzzahliges Vielfaches der gewünschten Ein-/Aus-Periode ist. Durch die Ganzzahldivision können sich also Abweichungen der gewünschten Ein-/Aus-Periode $T^*_{ea}$ von der tatsächlich angezeigten Ein-/Aus-Periode $T_{ea}$ ergeben. Dies ist insbesondere abhängig von der Wertebereichperiode $T_w$, und daher von der gewählten Buszykluszeit $T_{Bus}$ und/oder dem Wertebereich W. Diese Abweichung bewegt sich jedoch normalerweise in einem Rahmen von wenigen Prozent, die für den Betrachter jedoch nicht wahrnehmbar ist (z.B. eine Ein-/Aus-Periode von 1100ms statt 1000 ms). Gleiches gilt für eine Abweichung des gewünschten Tastgrads V* von dem tatsächlichen Tastgrad V.

Die durch die Ganzzahldivision entstehende prozentuale Abweichung A (in Prozent % angegeben) der tatsächlichen Ein-/Aus-Periode $T_{ea}$ von der gewünschten Ein-Aus-Periode $T^*_{ea}$ kann wie folgt berechnet werden:

$$\Delta = [ \ ( \ ( \ T_w \ / \ F) - T^*_{ea}) \cdot 100 \ ] \ / \ T^*_{ea}.$$

Diese Abweichung kann durch ein aufwändigeres Verfahren minimiert werden. Dies kann durch die Anpassung des Wertebereichs erreicht werden, beispielsweise durch manuelle Nullung bei Überschreiten eines bestimmten Wertes des Busnachrichtenzählers. Der neue Wertebereich kann insbesondere kleiner sein als der durch die Größe des Busnachrichtenzählers in der Busnachricht festgelegte Wertebereich. Der neue Wertebereich ist hierbei so zu wählen, dass für den Skalierungsfaktor F, würde man ihn als Fließkommazahl berechnen, immer ein Wert ohne Divisionsrest entsteht. Der neue Wertebereich bzw. der Überlaufwert muss den Nachrichtenempfängern hierbei explizit mitgeteilt werden. Rein beispielhaft kann die Größe des Busnachrichtenzählers 16 Bit betragen, so dass sich ein Wertebereich von 65536 ergibt, wobei er Busnachrichtenzähler von 0 bis 65535 läuft, d.h. bei einer Inkrementierung des Wertes 65535 der Wert auf 0 gesetzt. Eine manuelle Nullung kann dann dadurch erfolgen, dass der Wertebereich beispielsweise nur 10000 ist, d.h. 10000 unterschiedliche Werte. In diesem Fall wird bei Inkrementierung des Wertes 9999 der Wert manuell auf 0 gesetzt.

Der Wertebereich W kann an das Busnachrichtenzeitintervall $T_{Bus}$ angepasst werden. Beispielsweise kann der Wertebereich bzw. die Größe des Busnachrichtenzählers vergrößert oder verkleinert werden. Beispielsweise kann für ein sehr kleines Busnachrichtenzeitintervall $T_{Bus}$ und/oder eine relativ große Ein-/Aus-Periode $T_{ea}$ die Größe des Busnachrichtenzählers vergrößert werden (z.B. von 16 Bit auf 32 Bit), insbesondere spätestens dann wenn die Ein-/Aus-Periode $T_{ea}$ größer wird als die Wertebereichperiode $T_W$.

Beispielsweise kann der Wertebereich so gewählt werden, dass die Wertebereichperiode $T_W$ größer oder mindestens gleich der Ein-/Aus-Periode $T_{ea}$ ist. Insbesondere kann zur Abdeckung eines bestimmten Zeitbereichs des Busnachrichtenzeitintervalls (z.B. zwischen 63 μs und 10 ms) der Wertebereich W so gewählt werden, dass die Wertebereichperiode $T_W$ stets größer oder mindestens gleich der Ein-/Aus-Periode $T_{ea}$ ist. Beispielsweise müsste bei einem Busnachrichtenzeitintervall $T_{Bus}$ von 32 μs und um eine Ein-/Aus-Periode $T_{ea}$ von 1 s (1000000 μs) zu realisieren, der Wertebereich mindestens 31250 betragen, d.h. die Größe des Busnachrichtenzählers muss mindestens 15-Bit sein (entspricht einem Wertebereich von 32768).

Zum Besseren Verständnis folgen nun spezifische Beispiele der Auswertung des Busnachrichtenzählers bzw. des Steuerungsalgorithmus anhand des Beispiels der Fig. 5 (Blinken) und Fig. 6 (Blitzen). Es wird hier angenommen, dass der Wertebereich W des Busnachrichtenzählers 65.536 beträgt.

**Beispiel 1:**

Es folgt ein erstes Beispiel mit einem sehr kurzen Busnachrichtenzeitintervall $T_{Bus}$. Es werden folgende Parameterwerte angenommen:

$$W = 65536$$

$$T_{Bus} = 63 \ \mu s$$

$$V^*_{Blink} = 1 \ / \ 2$$

$$V^*_{Blitz} = 1 / 5$$

$$T^*_{ea} = 1\ 000\ 000\ \text{µs} = 1\text{s}$$

Ein Prozessor mit Gleitkommarechnung führt dann folgende Berechnungen aus:

$$T_W = W \cdot T_{Bus} = 65536 \cdot 63\ \text{µs} = 4\ 128\ 768\ \text{µs}$$

$$F = round(\ T_W/\ T^*_{ea}\ ) = round\ (4128768\ \text{µs}\ /\ 1\ 000\ 000\ \text{µs}) = round\ (4{,}128768) = 4$$

$$U_{Blink} = round\ (W \cdot V^*_{Blink}) = round\ (65536 \cdot 1/2\ ) = 32768$$

$$U_{Blitz} = round\ (W \cdot V^*_{Blitz}) = round\ (65536 \cdot 1/5\ ) = 13107$$

Hingegen ein Prozessor ohne Gleitkommarechnung führt folgende Berechnungen aus:

$$T_W = W \cdot T_{Bus} = 65536 \cdot 63\ \text{µs} = 4\ 128\ 768\ \text{µs}$$

$$F = (T_W + T^*_{ea}\ /\ 2)\ /\ T^*_{ea} = (4\ 128\ 768\ \text{µs} + 1\ 000\ 000\ \text{µs}\ /\ 2)\ /\ 1\ 000\ 000\ \text{µs} = (4$$

$$128\ 768\ \text{µs} + 500\ 000\ \text{µs})\ /\ 1\ 000\ 000\ \text{µs} = 4\ 628\ 768\ \text{µs}\ /\ 1\ 000\ 000\ \text{µs} = 4$$

$$U_{Blink} = W \cdot V^*_{Blink} = 65536\ /\ 2 = 32768$$

$$U_{Blitz} = W \cdot V^*_{Blitz} = 65536\ /\ 5 = 13107$$

Es ergibt sich folgender Pseudocode für das erste Beispiel:

```
Wenn (LED == soll_blinken)
  {
  Wenn ((Z% 16384) < 8192)
    {
    LED = ein
    }
  ansonsten
    {
    LED = aus
  }
}
  Wenn (LED == soll_blitzen)
    {
    Wenn ((Z% 16384) < 3276)
      {
      LED = ein
      }
    ansonsten
      {
      LED = aus     }
}
```

Für dieses erste Beispiel ergibt sich damit für die prozentuale Abweichung:

$$\Delta\% = [\,(\,(4\,128\,768\ \mu s\,/\,4) - 1\,000\,000\ \mu s\,)\,{}^*100]\,/\,1\,000\,000\ \mu s = 3{,}2\ \%$$

Die Abweichung des tatsächlichen Blinkens/Blitzens vom gewünschten Blinken/Blitzen ist in diesem Fall gering, da sich die Divisionsreste auf sehr viele Busnachrichtenzeitintervalle bzw. Buszyklen verteilen.

**Beispiel 2:**

Es folgt ein zweites Beispiel mit einem sehr langen Busnachrichtenzeitintervall $T_{Bus}$. Es werden folgende Parameterwerte angenommen:

$$W = 65536$$

$$T_{Bus} = 10\,000\ \mu s$$

$$V^*_{Blink} = 1\,/\,2$$

$$V^*_{Blitz} = 1\,/\,5$$

$$T^*_{ea} = 1\,000\,000\ \mu s = 1\ s$$

Ein Prozessor ohne Gleitkommarechnung führt folgende Berechnungen aus:

$$T_W = W \cdot T_{Bus} = 65536 \cdot 10\,000\ \mu s = 655\,360\,000\ \mu s$$

$$F = (T_W + T^*_{ea}\,/\,2)\,/\,T^*_{ea} = (655\,360\,000\ \mu s + 500\,000\ \mu s)\,/\,1\,000\,000\ \mu s = 655$$

$$U_{Blink} = W \cdot V^*_{Blink} = 65536\,/\,2 = 32768$$

$$U_{Blitz} = W \cdot V^*_{Blitz} = 65536\,/\,5 = 13107$$

Es ergibt sich folgender Pseudocode:

```
Wenn (LED == soll_blinken)
  {
  Wenn ((Z % 100) < 50)
    {
    LED = ein
    }
  ansonsten
    {
    LED = aus
  }
}
Wenn (LED == soll_blitzen)
  {
  Wenn ((Z % 100) < 20)
    {
```

```
    LED = ein
    }
ansonsten
    {
    LED = aus        }
}
```

Für dieses zweite Beispiel ergibt sich damit für die prozentuale Abweichung:

$$\Delta\% = [ ( (655\,360\,000 \text{ µs} / 655) - 1\,000\,000 \text{ µs} ) * 100] / 1\,000\,000 \text{ µs} = 0,055 \%$$

Die Abweichung des tatsächlichen Blinkens/Blitzens vom gewünschten Blinken/Blitzen ist in diesem Fall gering, da sich die Divisionsreste auf sehr viele Busnachrichtenzeitintervalle bzw. Buszyklen verteilen, aufgrund des sehr langsamen bzw. langen Busnachrichtenzeitintervalls.

In diesem Beispiel wird ein Problem deutlich, dass die letzten Werte des Wertebereichs "übrig" bleiben können bzw. ein Rest bleiben kann. In diesem Beispiel passen 655 Ein-Aus-Perioden in eine Wertebereichperiode, aber am Ende bleiben 36 Werte bzw. Buszyklen "übrig", die nicht verteilt werden können. Wie aus dem Pseudocode ersichtlich, würde das Anzeigelement bzw. LED für 36 · 10 ms eingeschaltet sein und bei Beginn einer neuen Wertebereichperiode eingeschaltet bleiben. Dies könnte nach etwa 10 Minuten zu einem "synchronen Schluckauf" aller Anzeigelemente bzw. LEDs führen. Dieses Problem könnte durch Anpassung des Wertebereichs auf 65500 vermieden werden.

**Beispiel 3:**

In dem folgenden, dritten Beispiel wird die größtmögliche Abweichung gezeigt. Dies ist beispielsweise der Fall, wenn sich bei der Division bzw. dem Quotienten der Wertebereichperiode $T_W$ durch die gewünschte Ein-/Aus-Periode $T^*_{ea}$ ein Rest von $1/2 \cdot T^*_{ea}$ ergeben würde. In dem vorliegenden spezifischen Beispiel ergäbe sich die größtmögliche Abweichung, wenn sich die Wertebereichperiode $T_W$ bei einer gewünschten Ein-/Aus-Periode von 1 s im Bereich um 4,5 s befindet. Dies wäre der Fall, bei konstantem Wertebereich, bei einem Busnachrichtenzeitintervall $T_{Bus}$ von ungefähr 69 µs. Es werden daher folgende Parameterwerte angenommen:

$$W = 65536$$

$$T_{Bus} = 69 \text{ µs}$$

$$V^*_{Blink} = 1 / 2$$

$$V^*_{Blitz} = 1 / 5$$

$$T^*_{ea} = 1\,000\,000 \text{ µs} = 1s$$

Ein Prozessor ohne Gleitkommarechnung führt dann folgende Berechnungen aus:

$$T_W = W \cdot T_{Bus} = 65536 \cdot 69 \text{ µs} = 4\,521\,984 \text{ µs}$$

$$F = (T_W + T^*_{ea} / 2) / T^*_{ea} = (4\,521\,984 \text{ µs} + 500\,000 \text{ µs}) / 1\,000\,000 \text{ µs} = 5$$

$$U_{Blink} = W \cdot V^*_{Blink} = 65536 / 2 = 32768$$

$$U_{Blitz} = W \cdot V^*_{Blitz} = 65536 / 5 = 13107$$

Es ergibt sich folgender Pseudocode:

```
Wenn (LED == soll_blinken)
  {
  Wenn ((Z% 13107) < 8192)
    {
    LED = ein
    }
  ansonsten
    { LED = aus
  }
}
Wenn (LED == soll_blitzen)
  {
  Wenn ((Z % 13107) < 3276)
    {
    LED = ein
    }
  ansonsten
    {
    LED = aus          }
}
```

Für obiges Beispiel ergibt sich damit für die prozentuale Abweichung:

$$\Delta\% = [\,(\,(4\,521\,984\,\mu s / 5) - 1\,000\,000\,\mu s\,) * 100] / 1\,000\,000\,\mu s = -9{,}56\,\%$$

In diesem Fall ist also die tatsächliche Ein-/Aus-Periode $T_{ea}$ etwa 904 ms statt dem Wert 1000 ms der gewünschten Ein-/Aus-Periode $T^*_{ea}$. Eine derartig kleine Abweichung fällt jedoch nicht wirklich ins Gewicht.

**Beispiel 4:**

Um den Sachverhalt mit der Abweichung nochmals etwas zu verdeutlichen, soll sich die Grenze der Wertebereichperiode $T_W$, in diesem spezifischen Fall die Grenze von 4,5 s, noch von unten her genähert werden. Es werden folgende Parameterwerte angenommen:

$$W = 65536$$

$$T_{Bus} = 68\,\mu s$$

$$V^*_{Blink} = 1 / 2$$

$$V^*_{Blitz} = 1 / 5$$

$$T^*_{ea} = 1\,000\,000\,\mu s = 1s$$

Ein Prozessor ohne Gleitkommarechnung führt dann folgende Berechnungen aus:

$$T_W = W \cdot T_{Bus} = 65536 * 68\,\mu s = 4\,456\,380\,\mu s$$

$$F = (T_W + T^*_{ea} / 2) / T^*_{ea} = (4\ 456\ 380\ \mu s + 500\ 000\ \mu s) / 1\ 000\ 000\ \mu s = 4$$

$$U_{Blink} = W \cdot V_{Blink} = 65536 / 2 = 32768$$

$$U_{Blitz} = W \cdot V_{Blitz} = 65536 / 5 = 13107$$

Es ergibt sich folgender Pseudocode:

```
Wenn (LED == soll_blinken)
  {
  Wenn ((Z% 13107) < 8192)
    {
    LED = ein
    }
  ansonsten
    LED = aus
  }
}
Wenn (LED == soll_blitzen)
  {
  Wenn ((Z% 13107) < 3276)
    {
    LED = ein
    }
  ansonsten
    {
    LED = aus        }
  }
```

Für obiges Beispiel ergibt sich damit für die Abweichung:

$$\Delta\% = [\ (\ (4\ 456\ 380\ \mu s / 4) - 1\ 000\ 000\ \mu s\ ) * 100] / 1\ 000\ 000\ \mu s = 11{,}41\ \%$$

In diesem Fall ist also die tatsächliche Ein-/Aus-Periode $T_{ea}$ etwa 1114 ms statt dem Wert 1000 ms der gewünschten Ein-/Aus-Periode $T^*_{ea}$.

Anzumerken ist, dass bei den hier in den spezifischen Beispielen 1 bis 4 gezeigten Busnachrichtenzeitintervallen zwischen 63 $\mu s$ und 10 ms die Abweichung niemals größer als 12,5 % sein kann und am größten bei einem Busnachrichtenzeitintervall von 68,66 $\mu s$ ist. Bei größeren Busnachrichtenzeitintervallen wird die prozentuale Abweichung "zickzack"-förmig immer kleiner.

## Patentansprüche

1. Verfahren zum Synchronisieren von Anzeigeelementen in einem Steuerungssystem (10) mit über einen Bus (25) verbundenen Teilnehmern, die zumindest einen Nachrichtensender (12) und eine Anzahl von Nachrichtenempfängern (18a, 18b) umfassen, wobei der Nachrichtenempfänger (18a, 18b) jeweils ein Anzeigeelement (15a, 15b), das zeitlich abwechselnd in einen eingeschalteten und einen ausgeschalteten Zustand versetzbar ist, und eine Steuereinheit (20a, 20b) zum Erzeugen eines Steuersignals, das das Anzeigeelement (15a, 15b) zwischen den Zuständen umschaltet, umfasst, wobei der Nachrichtensender (12) in einem definierten wiederkehrenden Busnachrichtenzeitintervall ($T_{Bus}$) eine jeweils aktuelle Busnachricht über den Bus (25) sendet, **gekennzeichnet dadurch, dass** die Busnachricht jeweils einen Busnachrichtenzähler umfasst, der einen Wert (Z) in einem definierten Wertebereich (W) hat, wobei beim Senden einer aktuellen Busnachricht jeweils der Wert (Z) in einer vordefinierten Weise geändert wird, und wobei nach Erreichen des Endes des Wertebereichs (W) der Wert (Z) zurückgesetzt wird, wobei der Nachrichtenempfänger (18a, 18b) jeweils die Busnachrichten über den Bus (25) empfängt, und wobei die Steuereinheit (20a, 20b) jeweils in gleicher Weise den Busnachrichtenzähler in der aktuellen Busnachricht auswertet und in Abhängigkeit davon das Steuersignal erzeugt, so dass die Anzeigeelemente (15a, 15b) synchron zueinander mit einer bestimmten Ein-/Aus-Periode ($T_{ea}$) abwechselnd in den eingeschalteten und den ausgeschalteten Zustand versetzt werden.

2. Verfahren nach Anspruch 1, wobei der Nachrichtenempfänger (18a, 18b) jeweils das definierte Busnachrichtenzeitintervall ($T_{Bus}$) und/oder den definierten Wertebereich (W) speichert.

3. Verfahren nach einem der Ansprüche 1 oder 2, wobei die Steuereinheit (20a, 20b) jeweils die Anzahl der Busnachrichtenzähler in einem definierten Zeitraum zählt und anhand dieser Anzahl und des definierten Zeitraums das Busnachrichtenzeitintervall ($T_{Bus}$) ermittelt.

4. Verfahren nach einem der Ansprüche 1 bis 3, wobei der Nachrichtenempfänger (18a, 18b) jeweils eine gewünschte Ein-/Aus-Periode ($T^*_{ea}$) und/oder einen gewünschter Tastgrad ($V^*$) speichert.

5. Verfahren nach einem der Ansprüche 1 bis 4, wobei beim Auswerten eine definierte Umschaltgrenze (U) verwendet wird, die das Produkt aus dem Wertebereich (W) und dem gewünschten Tastgrad ($V^*$) ist.

6. Verfahren nach einem der Ansprüche 1 bis 5, wobei die Steuereinheit (20a, 20b) jeweils den Busnachrichtenzähler durch einfache Ganzzahldivisionen auswertet.

7. Verfahren nach einem der Ansprüche 1 bis 6, wobei beim Auswerten eine Wertebereichperiode ($T_W$) verwendet wird, die das Produkt aus dem Wertebereich (W) und dem Busnachrichtenzeitintervall ($T_{Bus}$) ist, und wobei die Wertebereichperiode ($T_W$) durch die bestimmte Ein-/Aus-Periode ($T_{ea}$) ganzzahlig teilbar ist.

8. Verfahren nach Anspruch 7, wobei die Wertebereichperiode ($T_W$) ein ganzzahliges Vielfaches der bestimmten Ein-/Aus-Periode ($T_{ea}$) ist, und wobei das ganzzahlige Vielfache einen Skalierungsfaktor definiert.

9. Verfahren nach Anspruch 7, wobei die Steuereinheit (20a, 20b) jeweils die Wertebereichperiode ($T_W$) als Produkt aus dem Wertebereich (W) und Busnachrichtenzeitintervall ($T_{Bus}$) ermittelt, den Quotient aus Wertebereichperiode ($T_W$) und der gewünschten Ein-/Aus-Periode ($T^*_{ea}$) ermittelt, und eine Ganzzahlrundung dieses Quotienten durchführt, deren Rundungsergebnis einen Skalierungsfaktor (F) definiert.

10. Verfahren nach einem der Ansprüche 8 bis 9 insofern sie von Anspruch 5 abhängen, wobei die Steuereinheit (20a, 20b) jeweils den Busnachrichtenzähler derart auswertet, dass der Modulo aus Wert (Z) des Busnachrichtenzählers durch den Quotienten aus dem Wertebereich (W) und Skalierungsfaktor (F) mit dem Quotienten aus der definierten Umschaltgrenze (U) und dem Skalierungsfaktor (F) verglichen wird, und wobei das Steuersignal erzeugt wird, wenn der Modulo den Quotienten aus der definierten Umschaltgrenze (U) und dem Skalierungsfaktor (F) überschreitet oder unterschreitet.

11. Verfahren nach einem der Ansprüche 1 bis 10, wobei der Wertebereich (W) an das Busnachrichtenzeitintervall ($T_{Bus}$) und/oder die Ein-/Aus-Periode angepasst wird.

12. Verfahren nach einem der Ansprüche 1 bis 11, wobei die bestimmte Ein-/Aus-Periode ($T_{ea}$), mit der das Anzeigeelement (15a, 15b) jeweils abwechselnd in den eingeschalteten und den ausgeschalteten Zustand versetzt wird, einen aktuellen Betriebszustand in dem Steuerungssystem (10) angibt, insbesondere einen Fehlerzustand in dem Steuerungssystem (10).

13. Verfahren nach einem der Ansprüche 1 bis 12, wobei bei einem ersten Satz von Nachrichtenempfängern die Anzeigeelemente synchron zueinander mit der bestimmten Ein-/Aus-Periode ($T_{ea}$) abwechselnd in den eingeschalteten und den ausgeschalteten Zustand versetzt werden, und wobei bei einem zweiten Satz von Nachrichtenempfängern die Anzeigeelemente synchron zueinander mit einer zweiten bestimmten Ein-/Aus-Periode ($T_{ea}$) abwechselnd in den eingeschalteten und den ausgeschalteten Zustand versetzt werden.

14. Steuerungssystem (10), insbesondere zur automatisierten Steuerung einer technischen Anlage, mit über einen Bus (25) verbundenen Teilnehmern, die zumindest einen Nachrichtensender (12) und eine Anzahl von Nachrichtenempfängern (18a, 18b) umfassen, wobei der Nachrichtenempfänger (18a, 18b) jeweils ein Anzeigeelement (15a, 15b), das zeitlich abwechselnd in einen eingeschalteten und einen ausgeschalteten Zustand versetzbar ist, und eine Steuereinheit (20a, 20b) zum Erzeugen eines Steuersignals, das das Anzeigeelement (15a, 15b) zwischen den Zuständen umschaltet, umfasst, wobei der Nachrichtensender (12) dazu ausgebildet ist in einem definierten wiederkehrenden Busnachrichtenzeitintervall ($T_{Bus}$) ein jeweils aktuelle Busnachricht über den Bus (25) zu senden, **gekennzeichnet dadurch, dass** die Busnachricht jeweils einen Busnachrichtenzähler umfasst, der einen Wert (Z) in einem definierten Wertebereich (W) hat, wobei der Nachrichtensender dazu ausgebildet ist beim Senden einer aktuellen Busnachricht jeweils den Wert (Z) in einer vordefinierten Weise zu verändern und nach Erreichen des Endes des Wertebereichs den Wert (Z) zurückzusetzen, wobei der Nachrichtenempfänger (18a, 18b) jeweils dazu ausgebildet ist die Busnachrichten über den Bus (25) zu empfangen, und wobei die Steuereinheit (20a, 20b) jeweils in gleicher Weise dazu ausgebildet ist den Busnachrichtenzähler in der aktuellen Busnachricht auszuwerten und in Abhängigkeit davon das Steuersignal zu erzeugen, so dass die Anzeigeelemente (15a, 15b) synchron zueinander mit einer bestimmten Ein-/Aus-Periode ($T_{ea}$) abwechselnd in den eingeschalteten und den ausgeschalteten Zustand versetzt werden.

**Claims**

1. A method for synchronizing display elements in a control system (10) having subscribers connected via a bus (25), said subscribers comprising at least one message transmitter (12) and a number of message receivers (18a, 18b), wherein the message receiver (18a, 18b) comprises a respective display element (15a, 15b), which can be toggled between a switched-on state and a switched-off state, and comprises a control unit (20a, 20b) for producing a control signal that toggles the display element (15a, 15b) from one state to the other, wherein the message transmitter (12) sends a respective current bus message via the bus (25) in a defined recurring bus message time interval ($T_{Bus}$), **characterized in that** the respective bus message comprises a respective bus message counter that has a value (Z) from a defined value range (W), wherein the value (Z) is changed in a predefined manner each time when a respective current bus message is sent, and wherein the value (Z) is reset once the end of the value range (W) has been reached, wherein the message receiver (18a, 18b) receives the respective bus messages via the bus (25), and wherein the control unit (20a, 20b) evaluates the respective bus message counter in the respective current bus message in the same manner and takes this as a basis for producing the control signal, so that the display elements (15a, 15b) are toggled between the switched-on state and the switched-off state in sync with one another and with a defined on/off period ($T_{ea}$).

2. The method of claim 1, wherein the message receiver (18a, 18b) respectively stores the defined bus message time interval ($T_{Bus}$) and/or the defined value range (W).

3. The method according to any one of claims 1 or 2, wherein the control unit (20a, 20b) respectively counts the number of bus message counters in a defined period of time and determines, based on this number and the defined period of time, the bus message time interval ($T_{Bus}$).

4. The method according to any one of claims 1 to 3, wherein the message receiver (18a, 18b) respectively stores a desired on/off period ($T^*_{ea}$) and/or a desired duty ratio ($V^*$).

5. The method according to any one of claims 1 to 4, wherein a defined changeover limit (U) is used for evaluating, which is the product of the value range (W) and the desired duty ratio ($V^*$).

6. The method according to any one of claims 1 to 5, wherein the control unit (20a, 20b) respectively evaluates the bus message counter by means of simple integer divisions.

7. The method according to any one of claims 1 to 6, wherein a value range period ($T_W$) is used for evaluating, which value range period is the product of the value range (W) and bus message time interval ($T_{Bus}$), and wherein the value range period ($T_W$) is divisible by the defined on/off period ($T_{ea}$) without remainder.

8. The method according to claim 7, wherein the value range period ($T_W$) is an integer multiple of the defined on/off period ($T_{ea}$), and wherein the integer multiple defines a scaling factor.

9. The method according to claim 7, wherein the control unit (20a, 20b) respectively determines the value range period ($T_W$) as the product of the value range (W) and bus message time interval ($T_{Bus}$), determines the quotient of value range period ($T_W$) and the desired on/off period ($T^*_{ea}$), and performs integer rounding of said quotient, from which the rounding result defines a scaling factor (F).

**10.** The method according to any one of claims 8 or 9 as long as depending from claim 5, wherein the control unit (20a, 20b) respectively evaluates the bus message counter such that the modulo from the value (Z) of the bus message counter divided by the quotient of the value range (W) and scaling factor (F) is compared with the quotient of the defined changeover limit (U) and the scaling factor (F), and wherein the control signal is produced if the modulo is above or below the quotient of the defined changeover limit (U) and the scaling factor (F).

**11.** The method according to any one of claims 1 to 10, wherein the value range (W) is matched to the bus message time interval ($T_{Bus}$) and/or the on/off period.

**12.** The method according to any one of claims 1 to 11, wherein the defined on/off period ($T_{ea}$) used for respectively toggling the display element (15a, 15b) between the switched-on state and the switched-off state indicates a current operating state in the control system (10), particularly an error state in the control system (10).

**13.** The method of one of claims 1 to 12, wherein for a first set of message receivers the display elements are toggled between the switched-on and switched-off states in sync with one another using the first defined on/off period ($T_{ea}$), and wherein for a second set of message receivers the display elements are toggled between the switched-on and switched-off states in sync with one another using a second defined on/off period ($T_{ea}$).

**14.** A control system (10), particularly for the automated control of a technical installation, comprising subscribers connected via a bus (25), said subscribers comprising at least one message transmitter (12) and a number of message receivers (18a, 18b), wherein the message receiver (18a, 18b) comprises a respective display element (15a, 15b), which can be toggled between a switched-on state and a switched-off state, and comprises a control unit (20a, 20b) for producing a control signal that toggles the display element (15a, 15b) between the states, wherein the message transmitter (12) is designed to send a respective current bus message via the bus (25) in a defined recurring bus message time interval ($T_{Bus}$), **characterized in that** the bus message comprises a respective bus message counter that has a value (Z) from a defined value range (W), wherein the message transmitter is further designed to alter the value (Z) in a predefined manner each time when a respective current bus message is sent and to reset the value (Z) once the end of the value range is reached, wherein the message receiver (18a, 18b) is respective-ly designed to receive the bus messages via the bus (25), and wherein the control unit (20a, 20b) is respectively designed to evaluate the bus message counter in the respective current bus message in the same manner and to take this as a basis for producing the control signal, so that the display elements (15a, 15b) are toggled between the switched-on and switched-off states in sync with one another with a defined on/off period ($T_{ea}$).

## Revendications

**1.** Procédé pour synchroniser des éléments d'affichage dans un système de commande (10) comportant des noeuds reliés par l'intermédiaire d'un bus (25), qui comprennent au moins un émetteur de messages (12) et un certain nombre de récepteurs de messages (18a, 18b), dans lequel le récepteur de messages (18a, 18b) comprend respectivement un élément d'affichage (15a, 15b), qui peut être amené à passer dans un état activé et dans un état désactivé de manière alternée dans le temps, et une unité de commande (20a, 20b) destinée à générer un signal de commande qui fait basculer les éléments d'affichage (15a, 15b) entre lesdits états, dans lequel l'émetteur de messages (12) émet à un intervalle de temps de message de bus répété défini ($T_{Bus}$) un message de bus respectif actuel par l'intermédiaire du bus (25), **caractérisé en ce que** le message de bus comprend respectivement un compteur de messages de bus qui a une valeur (Z) se situant dans une plage de valeurs définie (W), dans lequel la valeur (Z) est modifiée d'une manière prédéfinie lors de l'envoi d'un message de bus actuel respectif, et dans lequel après que l'extrémité de la plage de valeurs (W) a été atteinte, la valeur (Z) est réinitialisée, dans lequel le récepteur de messages (18a, 18b) reçoit respectivement les messages de bus par l'intermédiaire du bus (25), et dans lequel l'unité de commande (20a, 20b) évalue respectivement de la même manière le compteur de messages de bus dans le message de bus actuel et génère en fonction de celui-ci le signal de commande, de manière à ce que les éléments d'affichage (15a, 15b) soient amenés à passer de manière alternée dans l'état activé et dans l'état désactivé avec une période d'activation/désactivation déterminée ($T_{ea}$) en synchronisme les uns par rapport aux autres.

**2.** Procédé selon la revendication 1, dans lequel le récepteur de messages (18a, 18b) stocke respectivement l'intervalle de temps de message de bus défini ($T_{Bus}$) et/ou la plage de valeurs définie (W).

**3.** Procédé selon l'une quelconque des revendications 1 ou 2, dans lequel l'unité de commande (20a, 20b) compte respectivement le nombre des compteurs de messages de bus au cours d'un intervalle de temps défini et détermine l'intervalle de temps de message de bus ($T_{Bus}$) sur la base dudit nombre et de l'intervalle de temps défini.

4. Procédé selon l'une quelconque des revendications 1 à 3, dans lequel le récepteur de messages (18a, 18b) stocke respectivement une période d'activation/désactivation souhaitée ($T^*_{ea}$) et/ou un rapport cyclique souhaité ($V^*$).

5. Procédé selon l'une quelconque des revendications 1 à 4, dans lequel on utilise lors de l'évaluation une limite de basculement définie (U) qui est le produit de la plage de valeurs (W) par le rapport cyclique souhaité ($V^*$).

6. Procédé selon l'une quelconque des revendications 1 à 5, dans lequel l'unité de commande (20a, 20b) évalue respectivement le compteur de messages de bus par des divisions entières simples.

7. Procédé selon l'une quelconque des revendications 1 à 6, dans lequel on utilise lors de l'évaluation une période de la plage de valeurs ($T_w$) qui est le produit de la plage de valeurs (W) et de l'intervalle de temps de message de bus ($T_{Bus}$), et dans lequel la période de la plage de valeurs ($T_w$) est divisible en nombre entier par la période d'activation/désactivation déterminée ($T_{ea}$).

8. Procédé selon la revendication 7, dans lequel la période de la plage de valeurs ($T_w$) est un multiple entier de la période d'activation/désactivation déterminée ($T_{ea}$), et dans lequel le multiple entier définit un facteur d'échelle.

9. Procédé selon la revendication 7, dans lequel l'unité de commande (20a, 20b) détermine respectivement la période de la plage de valeurs ($T_w$) sous la forme d'un produit de la plage de valeurs (W) et de l'intervalle de temps de message de bus ($T_{Bus}$), détermine le quotient de la période de la plage de valeurs ($T_w$) par la période d'activation/désactivation souhaitée ($T^*_{ea}$), et effectue un arrondi entier dudit quotient, dont le résultat d'arrondi définit un facteur d'échelle (F).

10. Procédé selon l'une quelconque des revendications 8 à 9, dans la mesure où elles dépendent de la revendication 5, dans lequel l'unité de commande (20a, 20b) évalue respectivement le compteur de messages de bus de manière à ce que le modulo de la valeur (Z) du compteur de messages de bus par le quotient de la plage de valeurs (W) et du facteur d'échelle (F) soit comparé au quotient de la limite de basculement définie (U) et du facteur d'échelle (F), et dans lequel le signal de commande est généré lorsque le modulo dépasse le quotient de la limite de basculement définie (U) et du facteur d'échelle (F) ou s'abaisse en-dessous de celui-ci.

11. Procédé selon l'une quelconque des revendications 1 à 10, dans lequel la plage de valeurs (W) est adaptée à l'intervalle de temps de message de bus ($T_{Bus}$) et/ou à la période d'activation/désactivation.

12. Procédé selon l'une quelconque des revendications 1 à 11, dans lequel la période d'activation/désactivation déterminée ($T_{ea}$) avec laquelle l'élément d'affichage (15a, 15b) est respectivement amené à passer de manière alternée dans l'état activé et dans l'état désactivé, indique un état de fonctionnement actuel dans le système de commande (10), notamment un état d'erreur dans le système de commande (10).

13. Procédé selon l'une quelconque des revendications 1 à 12, dans lequel, pour un premier ensemble de récepteurs de messages, les éléments d'affichage sont amenés à passer de manière alternée dans l'état activé et dans l'état désactivé avec la période d'activation/désactivation déterminée ($T_{ea}$) en synchronisme les uns par rapport aux autres, et dans lequel, pour un deuxième ensemble de récepteurs de messages, les éléments d'affichage sont amenés à passer de manière alternée dans l'état activé et dans l'état désactivé avec une deuxième période d'activation/désactivation déterminée ($T_{ea}$) en synchronisme les uns par rapport aux autres.

14. Système de commande (10), notamment destiné à commander de manière automatisée une installation technique, comportant des noeuds reliés par l'intermédiaire d'un bus (25), qui comprennent au moins un émetteur de messages (12) et un certain nombre de récepteurs de messages (18a, 18b), dans lequel le récepteur de messages (18a, 18b) comprend respectivement un élément d'affichage (15a, 15b) qui peut être amené à passer dans un état activé et dans un état désactivé de manière alternée dans le temps, et une unité de commande (20a, 20b) destinée à générer un signal de commande qui fait basculer l'élément d'affichage (15a, 15b) entre lesdits états, dans lequel l'émetteur de messages (12) est conçu pour émettre un message de bus actuel respectif par l'intermédiaire du bus (25) à un intervalle de temps de message de bus répété défini ($T_{Bus}$), **caractérisé en ce que** le message de bus comprend respectivement un compteur de messages de bus qui a une valeur (Z) se situant dans une plage de valeurs définie (W), dans lequel l'émetteur de messages est conçu pour modifier d'une manière prédéfinie la valeur (Z) lors de l'envoi d'un message de bus actuel respectif et pour réinitialiser la valeur (Z) après que l'extrémité de la plage de valeurs a été atteinte, dans lequel le récepteur de messages (18a, 18b) est respectivement conçu pour recevoir les messages de bus par l'intermédiaire du bus (25), et dans lequel l'unité de commande (20a, 20b) est respectivement conçue pour évaluer de la même manière le compteur de messages de bus dans le message de bus actuel et pour générer en fonction de celui-ci le signal de commande, de manière à ce que les éléments d'affichage (15a, 15b) soient amenés à passer de manière alternée dans l'état activé et dans l'état désactivé avec une période d'activation/désactivation déterminée ($T_{ea}$) en synchronisme les uns par rapport aux autres.

Fig.1

EP 2 875 412 B1

Fig.2

Fig.3

Fig.4

Fig.5

EP 2 875 412 B1

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 201636609 U
- WO 2004097539 A1
- WO 2006069691 A1